# EUROPÄISCHE PATENTSCHRIFT

(11) **EP 0 313 967 B1**
(45) Veröffentlichungstag und Bekanntmachung des Hinweises auf die Patenterteilung: **24.03.1993**
(21) Anmeldenummer: 88117320.7
(22) Anmeldetag: 18.10.1988
(51) Int. Cl.: G07F 7/10, G07F 7/08, G07F 7/12

(54) **Verfahren zur Echtheitsprüfung eines Datenträgers mit integriertem Schaltkreis**
Authentication method for a data carrier with integrated circuit
Méthode pour l'authentification d'un porteur d'informations à cicuit intégré

(30) Priorität: 30.10.1987 DE 3736882
(43) Veröffentlichungstag der Anmeldung: 03.05.1989
(73) Patentinhaber: GAO Gesellschaft für Automation und Organisation mbH, 81307 München (DE)
(72) Erfinder: Effing, Wolfgang, D-8031 Gilching (DE)
(74) Vertreter: Klunker . Schmitt-Nilson . Hirsch

(56) Entgegenhaltungen:
- EP-A- 0 186 038
- DE-A- 3 347 483
- FR-A- 2 606 199
- US-A- 4 529 870

## Beschreibung

Die Erfindung betrifft ein Verfahren zur Echtheitsprüfung eines Datenträgers mit wenigstens einem integrierten Schaltkreis, der Speicher- und Logikeinrichtungen aufweist sowie Elemente zur Ein- und Ausgabe von Daten.

Es ist seit längerem bekannt, die Echtheitsprüfung von Datenträgern, Wertzeichen oder ähnlichen geldwerten Produkten anhand einer für jedes Wertzeichen charakteristischen individuellen und maschinell feststellbaren Eigenschaft vorzunehmen.

Man erreicht dabei einen hohen Sicherheitsstandard, wenn es sich bei der individuellen Eigenschaft oder Kenngröße um ein nur mit sehr hohem technischen Aufwand nachahmbares und für jedes Wertzeichen charakteristisches Merkmal handelt. Eine solche individuelle Eigenschaft kann beispielsweise eine bei der Herstellung aufgrund von Fabrikationsstreuungen mehr oder weniger zufällig entstehende Größe sein.

In der DE-OS 24 58 705 wird in diesem Zusammenhang vorgeschlagen, als individuelle Größe bei einem Wertzeichen oder einer Banknote die Farb- und Druckeigenschaften, die Dicke des Farbauftrags, Papierabmessungen oder Papiereigenschaften zu messen. Die automatisch gemessene individuelle Kenngröße wird unter Umständen in chiffrierter Form auf dem Wertzeichen gespeichert. Bei der Echtheitsprüfung wird die individuelle Größe erneut gemessen und mit dem auf dem Wertzeichen gespeicherten, bei der erstmaligen Prüfung ermittelten Vergleichswert auf Übereinstimmung geprüft.

Gemäß einem anderen Vorschlag (EP-A-112 461) ist es auch bekannt, als individuelle und aufgrund von Fertigungstoleranzen, streuende Kenngröße die spezifische Eigenschaft einer Mikrowellenantenne zu messen, die bei diesem bekannten Vorschlag in der Ausweiskarte vorgesehen ist, um den integrierten Schaltkreis kontakt- bzw. berühungslos betreiben zu können. Als elektrisch meßbare Größen werden beispielsweise die für jede Antenne spezifischen Reflexionseigenschaften gemessen. Die gemessene Größe wird über einen geheimen Algorithmus zu einer Codezahl verschlüsselt, die im Speicher der integrierten Schaltung für die spätere Echtheitsprüfung als Vergleichswert abgelegt wird.

Bei dem vorgeschlagenen Verfahren wird im Zusammenhang mit einem Datenträger mit integriertem Schaltkreis nur ein Merkmal einer peripheren Einheit, der Mikrowellenantenne, zur Echtheitsbestimmung des Datenträgers gemessen. Über dieses Merkmal wird aber nicht der Schaltkreis selbst gegen Manipulationen geschützt. Vor allem ist aber das hier vorgeschlagene Verfahren nur bei den Ausweiskarten anwendbar, bei denen der Dialog zwischen Karte und Prüfeinheit berührungs- bzw. kontaktlos über entsprechende Kopplungselemente wie Mikrowellenantennen erfolgt.

Die überwiegende Zahl der heute und wohl auch in absehbarer Zeit in der Praxis eingesetzten Ausweiskarten mit integriertem Schaltkreis werden hingegen über die herkömmliche galvanische Kontaktierung berührend betrieben. Diese Kontaktiermethode ist zweifellos technisch wesentlich einfacher zu realisieren und kostengünstiger.

Weiterhin ist aus der EP-A-2 0 186 038 ein Identifikationssystem, bestehend aus einem Terminal und einer IC-Karte bekannt, wobei die Gültigkeit einer mit dem Terminal kommunizierenden Karte anhand der von der Karte für die Entschlüsselung einer vom Terminal erhaltenen verschlüsselten IdentifikationscodeInformation, unter Verwendung eines für einen bestimmten Prozessortyp spezifischen Algorithmus benötigten Berechnungszeit, festgestellt werden kann. Die aktuelle Berechnungszeit der Karte wird mit einer vom Terminal geschätzten Berechnungszeit in diesem vergleichen und im Falle einer zu starken Abweichung wird die Karte vom Terminal als ungültig erkannt.

Die Aufgabe der Erfindung besteht nun darin, ein Verfahren zur Echtheitsprüfung von Datenträgern mit integriertem Schaltkreis vorzuschlagen, das eine gegenüber Manipulationen zuverlässigere Echtheitsbestimmung ermöglicht und das für nahezu alle Datenträger mit integriertem Schaltkreis zur Anwendung kommen kann.

Die Aufgabe wird erfindungsgemäß durch die im kennzeichnenden Teil des Hauptanspruchs angegebenen Merkmale gelöst.

Die Erfindung beruht auf der überraschenden Erkenntnis, daß trotz des Perfektionismus und der ständig zunehmenden Miniaturisierung bei der IC-Herstellung und der sich ständig verbesserten Güte und Reinheit der Basismaterialien der integrierte Schaltkreis selbst immer noch die Möglichkeit in sich birgt, Charakteristiken bezüglich seiner "Feinstruktur" feststellen zu können, durch die er sich eindeutig auch von den Schaltkreisen des gleichen Typs und gleicher Funktion unterscheidet. Damit ermöglicht es der Schaltkreis selbst, individuelle, jeden einzelnen Schaltkreis kennzeichnende Daten zu gewinnen, die die allgemeinen Bedingungen für die Verwendung als Echtheitsmerkmal erfüllen.

Bei der Auswahl der für die Echtheitsprüfung zu verwendenden Eigenschaften ist darauf zu achten, daß diese aufgrund der fertigungstechnisch oder materialbedingten Toleranzen etc. in der "Feinstruktur" von Chip zu Chip eine ausreichende "Individualität" aufweist, mit vertretbarem Aufwand meßtechnisch erfaßbar ist, von äußeren Parametern, wie z. B. Temperatur, unabhängig bzw. entkoppelbar ist und problemlos beliebig oft und an unterschiedlichen Orten gemessen und mit zu einem früheren Zeitpunkt aufgenommenen und aufgezeichneten Meßergebnis verglichen werden kann.

Da nun ein oder mehrere individuelle Eigenschaften des integrierten Schaltkreises selbst geprüft werden, muß der Fälscher, der das Prüfverfahren manipulieren will, diese Manipulationen am Chip selbst vornehmen, was, soweit es überhaupt zum Ziel führen kann, ein hohes Maß an Wissen und technischer Fertigkeit auf dem Bereich der Chiptechnologie erfordert.

Mit der vorliegenden Erfindung wird nun gezeigt, daß ein Schaltkreis nicht nur nach seinem Typ, Layout etc. klassifiziert werden kann, um sich gegen Simulationsschaltungen zu schützen, sondern selbst individuelle Größen bestimmt werden können, die überwiegend aus Fabrikationsstreuungen bei der Herstellung des Schaltkreises resultieren und jeden einzelnen Schaltkreis individuell kennzeichnen. Derartige Charakteristiken sind im allgemeinen - auch für einen Fälscher, der über ein entsprechendes Wissen und Können in der Chip-Technologie verfügt - nicht nachahmbar.

Eine besonders vorteilhafte individuelle Größe eines Schaltkreises, mit der die Echtheit des Schaltkreises belegt werden kann, ist z. B. die in einem E²PROM-Speicher benötigte unterschiedliche minimale Programmierzeit für einzelne Speicherzellen. Anhand dieses besonders gut erklärbaren Beispiels wird die Erfindung zusammen mit dem entsprechenden Meß- und Prüfverfahren für die Echtheitsbestimmung von Schaltkreisen eingehend erläutert.

Bei der überwiegenden Zahl der im Einsatz befindlichen Datenträger mit integriertem Schaltkreis werden heute und in Zukunft sicher in zunehmendem Maße diese sogenannten E²PROM-Speicher eingesezt. Es handelt sich dabei um nichtflüchtige, elektrisch mehrfach programmier- und löschbare Speicher.

Das wesentliche einer Speicherzelle eines E²PROM-Speichers besteht darin, daß sie eine durch eine dünne Isolierschicht gegenüber der Umgebung elektrisch getrennte Ladungszone aufweist, auf die durch die Isolierschicht hindurch unter Nutzung des sogenannten Tunnel-Effekts elektrische Ladungen aufgebracht, dort gespeichert und wieder entfernt werden können.

Die Isolierschichten der einzelnen Speicherzellen eines integrierten Schaltkreises variieren, u. a. bedingt durch Fertigungstoleranzen bei der Herstellung in der Dicke der einzelnen Schichten sowie der Güte bzw. Reinheit des Materials, der Homogenität und Menge der Dotierung des Halbleitermaterials etc. vom Zufall abhängig innerhalb einer bestimmten Streubreite. Da bereits geringe Änderungen in diesen Parametern die Stärke des Tunnelstroms merklich beeinflussen, ergibt sich eine bestimmte Streubreite in den Zeiten, die notwendig sind, um eine Speicherzelle vom programmierten in den gelöschten Zustand zu schalten und umgekehrt.

In der Praxis wird daher eine stets einzuhaltende Programmierzeit festgelegt, die sich an den längsten benötigten Programmierzeiten orientiert und die demnach so bemessen ist, daß sicher alle zu verändernden Zellen in diesem Zeitraum auch geladen bzw. gelöscht werden.

Programmiert man aber nun beispielsweise eine aus z. B. 8 Speicherzellen bestehende Speicherzeile (auch Speicherwort genannt) gleichzeitig von logisch "0" auf logisch "1" und beobachtet während des Programmiervorgangs, in welcher zeitlichen Reihenfolge und gegebenenfalls auch mit welchen Zeitdifferenzen untereinander die Zellen von "0" auf "1" umschalten, so ergibt sich ein für jedes Speicherwort typisches individuelles "Schaltmuster".

Es hat sich überraschend gezeigt, daß jedes Speicherwort sein eigenes Schaltmuster aufweist und daß dieses für jedes einzelne Speicherwort (Speicherzeile) charakteristische Schaltmuster sich bei jedem Programmiervorgang immer wieder in gleicher Form einstellt.

Das "Schaltmuster" ist damit nicht nur ein gut streuendes, d. h. ein von Speicherwort zu Speicherwort und selbstverständlich auch von Schaltkreis zu Schaltkreis zufällig variierendes, sondern auch ein mit einfachen meßtechnischen Mitteln exakt reproduzierbares, individuelles Merkmal dieses Schaltkreises.

Aufgrund dieser Gegebenheiten eignet sich dieses Merkmal in hervorragender Weise zur Echtheitsbestimmung von integrierten Schaltkreisen.

Andere als Echtheitsmerkmal benutzbare individuelle Größen eines integrierten Schaltkreises sind z. B. die statische oder dynamische Eingangskennlinie, die insbesondere im Durchbruchsbereich von Schaltkreis zu Schaltkreis stark variiert und damit ein den Schaltkreis kennzeichnendes Merkmal darstellt. Auch bei Datenleitungen, z. B. einer Busleitung, in integrierten Schaltkreisen gleichen Typs und Bauart können bei ausreichender Auflösung individuell unterschiedliche Laufzeiten festgestellt werden, die auf Unterschieden in der Feinstruktur des Chips beruhen. Diese Unterschiede können zur Gewinnung individueller Kenndaten durch eine Absolutmessung der Laufzeit festgestellt werden. Meßtechnisch einfacher ist es jedoch, eine für den Parallelbetrieb konzipierte, mehrere (8- oder 16-) Bit umfassende Busleitung gleichzeitig mit einer Information zu belegen. Durch eine Relativmessung der von Bit zu Bit, d. h. von Leitung zu Leitung, unterschiedlichen Laufzeiten kann das für jede Busleitung charakteristische Laufprofil bestimmt werden. Auch hier wird sich aufgrund der Herstellungstoleranzen beim Schaltkreis ein "Laufprofil" herausstellen, das für den Schaltkreis charakteristisch und unveränderbar ist.

Gemäß einer weiteren Ausführungsform der Erfindung ist es aber auch möglich, die Oberflächenstruktur des Chips abzutasten, wobei sich bei nicht polierten Chips die rückwärtige durch den Sägevorgang stark strukturierte Oberfläche für diesen Zweck anbietet.

Neben diesen beispielhaft genannten Ausführungsformen von zufälligen Unique-Merkmalen, d. h. durch den Fabrikationsprozeß entstehende und unbeeinflußbare, einzigartige Eigenschaften nutzen, ist es auch möglich, gezielt Zufallsstrukturen auf oder in den integrierten Schaltkreis einzubringen, die einmal aufgebracht in identischer Form nicht mehr nachbildbar sind und somit ebenfalls als individuelles Merkmal für den einzelnen Schaltkreis genutzt werden können. Dies könnten z. B. in oder auf dem Chip befindliche metallische Beschichtungen mit einer wirren Flächenstruktur sein. Über eine Widerstandsmessung an vorzugsweise mehreren Orten kann die Flächenstruktur dann "ausgelesen" werden.

Die erfindungsgemäße Lösung bietet die Möglichkeit, das Echtheitsprüfverfahren in nahezu allen technischen und kommerziellen Gebieten, in denen Chipkarten eingesetzt werden, anzuwenden. Mit dem Einsatzgebiet des Datenträgers ist im allgemeinen aber auch der wirtschaftlich vertretbare Aufwand zur Prüfung des Echtheitsmerkmals festgelegt. Das Merkmal wird daher im allgemeinen unter Berücksichtigung des dazu notwendigen Prüfaufwandes und der jeweils geforderten Sicherheitsstufe ausgewählt. Die vorliegende Erfindung ermöglicht unter Benutzung der entsprechenden Speicher-, Steuerungs- und Logikeinrichtungen eines integrierten Schaltkreises eine Vielzahl von Varianten nicht nur bezüglich der Auswahl des individuellen Merkmals, sondern auch bezüglich seiner Auswertung, so daß jeweils abhängig vom Einsatzgebiet des Datenträgers und der erforderlichen Sicherheitsstufe ein gezielt in diesem Sinne angepaßtes individuelles Merkmal ausgewählt und ausgewertet werden kann.

Die die Echtheit des integrierten Schaltkreises belegenden individuellen Kenndaten können in verschlüsselter oder auch unverschlüsselter Form, je nach Anwendung, im Chip selbst oder auch außerhalb, z. B. in einer Zentrale, gespeichert werden. Bei der Echtheitsprüfung kann dann ein Vergleich der Daten im Chip selbst, im Terminal oder in der Zentrale erfolgen. Des weiteren ist es auch möglich, den Chip an seinen Träger, d. h. an die Karte, anzubinden, indem man diese Kenndaten in einer kartenspezifischen Form auf der Karte speichert. Um sowohl die Kartenechtheit als auch die Chipechtheit eindeutig feststellen zu können, können z. B. die den Chip kennzeichnenden Daten mit Echtheitskenndaten der Karte verknüpft und/oder gemeinsam abgespeichert werden.

Auch bezüglich der Verwendung dieses Echtheitsmerkmals für den Chip im System bieten sich verschiedene Möglichkeiten, so z. B. dessen Verarbeitung zu einer Merkzahl für den Benutzer, die er bei jeder Benutzung der Karte einzugeben hat, oder die Verwendung als Schlüssel für die Verschlüsselung anderer Daten, z. B. der Karte, oder des integrierten Schaltkreises etc.

In einer bevorzugten Ausführungsform erhält der Datenträger mit einem integrierten Schaltkreis, vorzugsweise in Form eines Mikroprozessors mit daran angeschlossenen Speichereinheiten, selbst die Meßeinrichtung für die Ermittlung dieser individuellen Kenndaten sowie Verschlüsselungseinrichtungen und gegebenenfalls auch eine Einrichtung, in der die ermittelten Kenndaten mit anderen elektronisch gespeicherten Daten zur Bildung eines Schlüssels kombiniert werden können. Der Mikroprozessor, die Meß-, Verschlüsselungs-, Schlüsselbildungseinrichtung und der Speicher sind vorzugsweise alle auf einem IC-Baustein (Chip) integriert.

Die von der internen Meßeinrichtung ermittelten Kenndaten können vorzugsweise nur bei der Initialisierung, also vor Ausgabe des Chips bzw. der die Chips enthaltenden Karte an den Benutzer im Klartext ausgegeben und in einer gesicherten Umgebung (Zentrale) als unveränderbare, nicht nachahmbare "Seriennummer" für spätere Überprüfungen gespeichert werden. Hierfür wird der Chip von der Karte und/oder Softwareseite her so konzipiert, daß diese Datenausgabe nur in einem einmaligen Vorgang durchführbar ist und die Kenndaten anschließend lediglich intern zur Bildung eines Schlüssels oder zur Verschlüsslung zur Verfügung stehen. Z. B. kann hierzu die Ausgangsleitung für diese Daten mit einer internen Fuse versehen werden, die nach Übermittlung der Daten irreversibel unterbrochen wird.

Bei dieser Initialisierung können neben der Registrierung der individuellen Kenndaten auch die erforderlichen Chiffrierprogramme, Schlüssel oder Schlüsselfragmente und auch Daten (Kartendaten etc.) in den Speicher der Karte geladen werden. Bei der Personalisierung - einen vom Initialisierungsvorgang eventuell unabhängigen zweiten Vorgang - werden dann die Speicher mit den Daten des Karteninhabers ergänzt und die in der Zentrale gespeicherten individuellen Kenndaten dem jeweiligen Inhaber zugeordnet. Diese Karte kann dann, sofern sie über die entsprechenden Schlüssel verfügt, online, off-line oder auch wahlweise on- oder off-line auf Systemzugehörigkeit und Echtheit geprüft werden.

Gemäß einer Ausführungsform für eine on-line-durchführbare Echtheitsprüfung wird in die Karte mit integrierter Meßeinrichtung und Chiffriereinrichtungen zusätzlich ein Schlüssel geladen, der z. B. für alle Karten unterschiedlich oder für alle Karten eines Systems, eines Instituts, einer Bank etc. einheitlich ist. Bei einer Transaktion, im Rahmen derer die Echtheit der Karte geprüft werden soll, werden mit Hilfe dieses Schlüssels die im Chip ermittelten Kenndaten verschlüsselt und die verschlüsselten Daten über eine Leitung an die Zentrale gesandt. Die Zentrale, die ebenfalls über diesen Schlüssel verfügt, kann dann diese Daten entschlüsseln und mit den dort gespeicherten Kenndaten der zugehörigen Karte vergleichen.

Damit das Ergebnis der Verschlüsselung nicht bei jeder Transaktion gleich ist, werden vorzugsweise variable Daten, wie z. B. eine von der Zentrale übersandte Zufallszahl, die Uhrzeit und/oder auch Transaktionsdaten, in die Verschlüsselung mit einbezogen.

In analoger Weise kann auch die Karte eine Zufallszahl zur Verschlüsselung an die Zentrale senden, um sich von der Authentizität des Dialogpartners zu versichern.

Da es sich bei diesen Kenndaten in der Regel um aus Herstellungstoleranzen gewonnene, zufällige Daten handelt, die sich mit der Zeit auch in einem gewissen Rahmen verändern können, werden bei der Überprüfung der Daten Abweichungen bis zu einem vorbestimmten Maße akzeptiert. Verfahren für die Ähnlichkeitsfeststellung zweier Datensätze sind z. B. in Form verschiedener Korrelationsverfahren hinlänglich bekannt. Werden zeitliche Veränderungen festgestellt, so kann dies für die nachfolgenden Prüfungen registriert werden, indem z. B. der gespeicherte Kenndatensatz in der Zentrale aktualisiert wird.

Eine andere Form des Einsatzes dieser individuellen Kenndaten in einem Echtheitsprüf- und/oder Identifizierungssystem besteht darin, diese als Eingangsdaten für die Bildung eines Schlüssels zu verwenden. Allerdings ist es hier erforderlich, daß die Kenndaten jeweils exakt reproduzierbar meßbar sind und möglichst keine im Ergebnis nicht mehr korrigierbare zeitliche Veränderungen durchlaufen. Bei Änderung von nur eines Bits im Kenndatensatz bzw. den daraus gebildeten Schlüssel würde sich nämlich bereits ein völlig anderes Verschlüsselungsergebnis ergeben. Eine Identität der Kenndaten kann z. B., wenn die Programmierzeiten von E²PROM-Zellen als Kenndaten dienen, durch entsprechende Vorauswahl der auszuwertenden Zellen oder auch durch zusätzliche gespeicherte Kontrollziffern, die eine gewisse nachträgliche Korrektur der gemessenen Werte zum gegebenen Wert gestatten, erreicht werden. Durch zusätzliche elektronische Speicherung der bei der Initialisierung ermittelten Kenndaten in einem von außen nicht zugänglichen Speicherbereich könnte in einer Vorabprüfung die Identität festgestellt werden.

Diese individuellen Kenndaten werden in einer bevorzugten Ausführungsform mit einem im Chip elektronisch gespeicherten Wert (Offset) zu einem Schlüssel kombiniert, der dann zur Verschlüsselung von beliebigen Daten herangezogen wird. Dieser Offset, der bei der Initialisierung der Karte erzeugt und im Chip gespeichert wird, wird vorzugsweise so gewählt, daß sich nach Kombination mit den Kenndaten ein für mehrere Karten, z. B. alle Karten eines Bank- oder Kreditinstituts, jeweils gleicher Schlüssel ergibt. Der oder diese Schlüssel werden dann in einer oder mehreren Authorisierungszentralen oder in den Transaktionsterminals (Geldausgabeautomaten, POS-Terminal etc.) installiert, so daß sich die Karte und die Zentrale bzw. Terminals vorzugsweise gegenseitig durch gegenseitigen Austausch verschlüsselter Daten identifizieren können (HandshakingVerfahren). Da bei dieser Echtheitsprüfung, statt auf die in der Zentrale gespeicherten Kenndaten zurückzugreifen, "globale" Schlüssel zur Anwendung kommen, eignet sich dieses Verfahren insbesondere zur off-line-Prüfung.

Für die Verschlüsselung der Daten können bekannte Algorithmen, wie z. B. der DES-Algorithmus oder auch Publik-Key-Algorithmen zur Anwendung kommen (siehe Meyer, Matyas "Cryptography: A new dimension in Computer Data Security", John Viley & Sons, New York, 1982, Seite 141 - 165; Rivest Shamir, Adelman "A Method for Obtaining digital Signatures and Publik-Key-Cryptosystems" Communication of the ACM, 21, No. 2, 120 - 126, 1978).

In der nachfolgenden Beschreibung bevorzugter Ausführungsformen sind Anwendungsbeispiele unter Verwendung von Publik-Key-Algorithmen aufgezeigt.

Die Verwendung dieser individuellen Kenndaten des Chips als Eingangsparamter einer Verschlüsselung oder einer Schlüsselbildung hat insbesondere den Vorteil, daß, selbst wenn es einem Außenseiter irgendwie möglich sein sollte, den Inhalt des Speichers des Chips, hard- oder softwaremäßig auszulesen, er selbst in diesem Fall noch nicht alle notwendigen Informationen zur Verfügung hat, um eine Karte duplizieren zu können. Um die zu verschlüsselnden Informationen bzw. die gesamte Schlüsselinformation zu erhalten, müßte er nämlich zusätzlich auch noch das System zur Bildung der individuellen Kenndaten auskundschaften, als müßte er feststellen, welcher Art das jeweilige Kenndatensystem ist (E²PROM-Zellen, Bus-Leitungen etc.) und wie diese zu messen, auszuwerten und für die Weiterverarbeitung umzusetzen sind.

Eine reine Chipanalyse, die technisch nur auf das Bestimmen der elektronisch gespeicherten Daten ausgerichtet ist, kann also bei den erfindungsgemäß arbeitenden Systemen aufgrund der "Speicherung" eines Teils der geheimen Information in einer von der normalen elektronischen Speicherung technisch völlig unterschiedlichen Weise nicht zum Erfolg führen.

Weitere Vorteile und vorteilhafte Weiterbildungen sind Gegenstand der Beschreibung der Erfindung anhand von Figuren.

Die Figuren zeigen:
- Fig. 1: eine Ausweiskarte mit integriertem Schaltkreis,
- Fig. 2: die Schnittansicht einer E²PROM-Zelle,
- Fig. 3a - c: die Schaltbilder einer E²PROM-Zelle in den verschiedenen Phasen Schreiben (a), Löschen (b), Lesen (c),
- Fig. 4a - f: verschiedene Diagramme zum zeitlichen Ablauf der Ladephase von E²PROM-Zellen gemäß dem erfindungsgemäßen Verfahren,
- Fig. 5: eine schematische Darstellung eines Blockschaltbilds zur Messung der unterschiedlichen Programmierzeiten,
- Fig. 6: ein Diagramm zum Verfahrensablauf hierzu,
- Fig. 7a - c: graphische Darstellungen der Meßresultate,
- Fig. 8: tabellarische Zusammenstellung der Meßresultate,
- Fig. 9: weitere tabellarische Zusammenstellungen von Meßresultaten,
- Fig. 10: schematische Darstellung der erfindungsgemäßen Systemkomponenten, Karte und Zentrale, in der Initialisierungsphase für eine on-line Echtheitsprüfung,
- Fig. 11: diese Systemkomponenten in der Prüfphase (on-line),
- Fig. 12: schematische Darstellung der erfindungsgemäßen Systemkomponenten, Karte und Zentrale, in der Initialisierungsphase für eine on-/off-Echtheitsprüfung,
- Fig. 13: die Systemkomponenten Karte - Terminal in der off-line-Prüfphase,
- Fig. 14: die Systemkomponenten Karte - Zentrale in der on-line-Prüfphase.

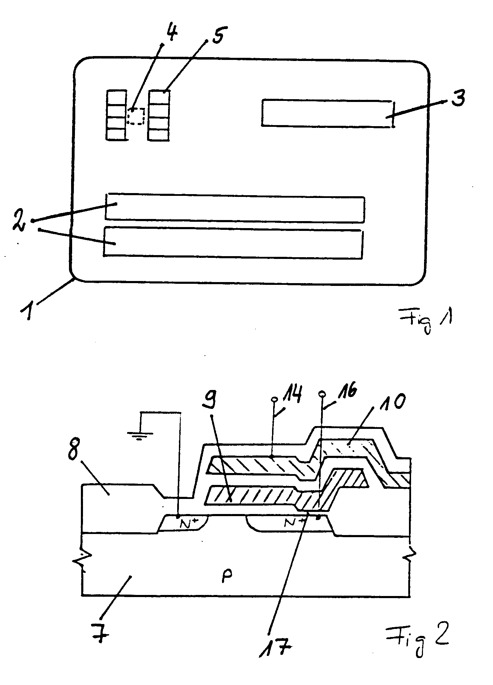

Die Fig. 1 zeigt die schematische Darstellung einer Ausweiskarte 1, wie sie z. B. im bargeldlosen Zahlungsverkehr, als Berechtigungskarte zum Zugang für Räumlichkeiten oder Einrichtungen, oder als Identitätsnachweis Anwendung findet. In der Regel weist die Karte in Feldern 2 die benutzerbezogenen Daten wie den Namen des Karteninhabers, der Kundennummer etc. sowie z. B. eine laufende Kartennummer auf. Im Feld 3 sind z. B. die Daten zu der kartenausgebenden Institution aufgedruckt. Zusätzlich weist diese Karte einen in das Karteninnere eingebetteten IC-Chip 4 auf (strichlichert dargestellt), der über Kontaktflächen 5 mit externen Peripheriegeräten (Prüfgeräten) elektrisch verbunden werden kann. Dieser integrierte Schaltkreis enthält Steuer- und Verarbeitungsschaltkreise sowie ein oder mehrere Speicher, wobei letztere hauptsächlich Speicher von Typ E²PROM sind, also nichtflüchtige elektrisch mehrfach programmier- und löschbare Speicher.

Gemäß einer bevorzugten Ausführungsform der Erfindung wird nun die von Speicherzelle zu Speicherzelle unterschiedliche Programmierzeit zur Erzeugung von jeden einzelnen Chip kennzeichnenden Daten bestimmt und diese Daten als individuelle Echtheitskenndaten verarbeitet und gespeichert. Es ist dabei nicht erforderlich, bestimmte Speicherbereiche für diese Kenndatenbestimmung freizuhalten. Es können beliebig belegte oder noch nicht belegte Bereiche herangezogen werden, wobei lediglich bei der Auswertung bereits belegter Bereiche der Speicherinhalt für diese Zeit der Kenndatenbestimmung anderweitig zwischengespeichert wird. Der technologische und physikalische Hintergrund sowie die Meß- und Auswerteverfahren werden im folgenden näher erläutert.

Die Fig. 2 zeigt eine Schnittansicht zu einer E²PROM-Zelle 6 des Floating-Gate-Typs. Bei diesem Typ befindet sich über der Silizium-Basisschicht 7 mit ihren unterschiedlich dotierten Bereichen (P, N⁺) ein durch eine Oxidschicht 8 getrennte elektrisch leitender Schichtbereich, das sogenannte Floating-Gate. Diese Floating-gate ist durch eine weitere leitende Schicht 10, das top- oder Steuergate überlagert, das im Gegensatz zum Floating-Gate direkt elektrisch ansteuerbar ist. Beim Schreib- oder Löschvorgang, bei dem eine entsprechend gepolte Spannungsdifferenz zwischen dem top- bzw. Steuergate 10 und dem N⁺-Gebiet aufgebaut wird, tunneln Elektronen von diesem N⁺-Gebiet in das Floating-Gate und werden dort gespeichert. Bei umgekehrter Polung werden dementsprechend Elektronen vom Floating-Gate abgezogen ("Löschvorgang"). Das Tunneln kann durch den Fowler-Nordheim-Mechanismus beschrieben werden. Um die Wahrscheinlichkeit möglichst gering zu halten, daß die auf dem Floating-Gate gespeicherten Elektronen durch größere Gitterfehler oder andere Störungen wieder abfließen können und damit die Speicherzelle wieder entladen wird, ist die das Floating-Gate von dem N⁺-Gebiet trennende Isolierschicht nur in einem kleinen Teilbereich 17 so gering gehalten, daß ein Tunneln möglich ist. Durch die Verringerung der effektiven Tunnelfläche ist die Wahrscheinlichkeit, daß in diesem Gebiet größere Gitterfehler vorliegen, entsprechend verringert. Neben dem hier verwendeten E²PROM-Speicher nach dem Floating-Gate-Typ können auch andere E²PROM-Speichertypen Anwendung finden, wie z. B. der ebenfalls angewandte MNOS-Typ, der sich im Prinzip von dem Floating-Gate-Typ dadurch unterscheidet, daß die Elektronen in einer nicht leitenden Substanz gespeichert werden.

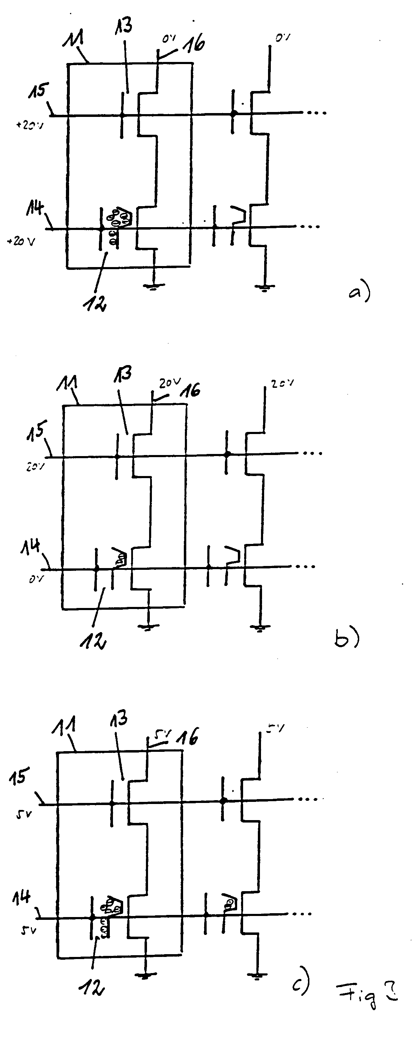

Die Fig. 3a - c zeigen das Prinzipschaltbild einer E²PROM-Zelle in den verschiedenen Schaltphasen: Schreiben, Löschen und Lesen. Um eine selektive Ansteuerung jeder E²PROM-Zelle 11 zu ermöglichen, enthält diese Zelle neben dem eigentlichen Speichertransistor 12 einen Auswahltransistor 13. Die Verschaltung dieser Transistoren ist in den Fig. 3 dargestellt.

### Der Schreibvorgang (Fig. 3a):

Beim Schreibvorgang wird auf die Programmierleitung 14, die auf das Top- bzw. Steuergate des Ladetransistors geht, die Programmierspannung Uₚₚ angelegt, die in Regel ≈ 20 V beträgt. Die gleiche Spannung liegt auf der Auswahlleitung 15, die das entsprechende Speicherwort ansteuert und den Auswahltransistor öffnet, während an der die Spalte definierenden Leitung 16 die Spannung 0 anliegt. Aufgrund dieser Spannungsunterschiede in dem Speichertransistor tunneln nun Elektronen auf dieses Floating-Gate und werden dort gespeichert. Nach Erreichen einer entsprechenden Anzahl von Elektronen auf diesem Floating-Gate ist dieser Transistor gesperrt.

### Der Löschvorgang (Fig. 3b):

Beim Löschvorgang werden die Spannungen entsprechend umgepolt, d. h. auf die Programmierleitung 14 wird eine Spannung von 0 V angelegt, während nun auf die die Spalte definierende Leitung 16 eine Spannung von 20 V angelegt wird. Durch den gegenpoligen Spannungsunterschied tunneln nun die Elektronen wieder von diesem Floating-Gate auf das benachbarte N⁺-Gebiet.

### Der Lesevorgang (Fig. 3c):

Beim Lesevorgang werden auf alle Leitungen (Programmier-, Auswahl- und die die Spalte definierende Leitung) eine Spannung von beispielsweise 5 V angelegt und der Zustand des Transistors, gesperrt oder durchgeschaltet, wird über entsprechende Hilfselemente (nicht dargestellt) festgestellt.

Die effektive Programmierzeit für jede Zelle, d. h. die Zeit, die erforderlich ist, um die notwendige Anzahl an Elektronen auf das Floating-Gate aufzubringen oder von diesem abfließen zu lassen, um den Transistor zu sperren bzw. zu öffen, ist nun abhängig von der Dicke der Isolierschicht, ihrer Fläche, ihrer internen Struktur etc., wobei letztere unter anderem den den Tunnelstrom beeinflussenden Potentialverlauf der Barriere bestimmt. Da aufgrund unvermeidbarer Fertigungstoleranzen und Inhomogenitäten im Material diese Größen von Zelle zu Zelle variieren, ist diese effektive Programmierzeit auch von Zelle zu Zelle unterschiedlich. Diese unterschiedlichen Programmierzeiten lassen sich nun feststellen, indem der Programmiervorgang z. B. getaktet vorgenommen wird und in den Zwischentakten jeweils der Zellenzustand geprüft wird.

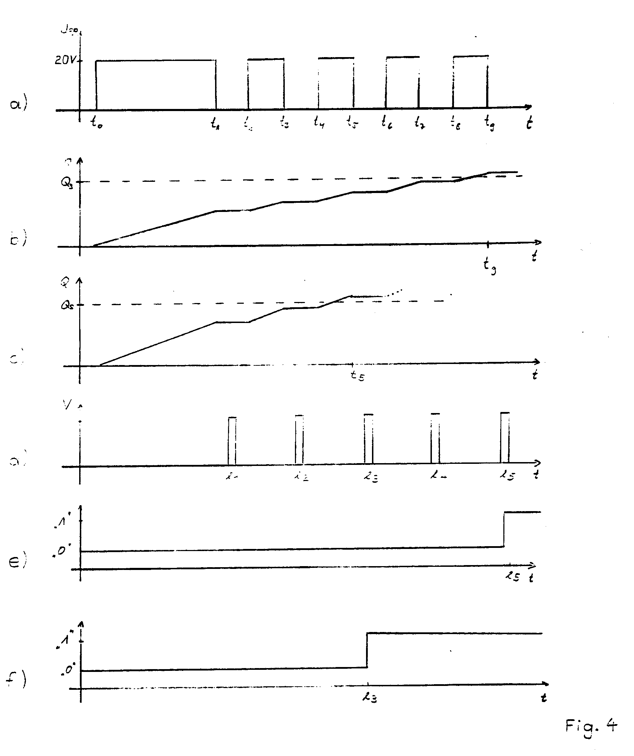

Die Fig. 4a zeigt in schematischer Darstellung eine hierzu geeignete Vorgehensweise. Die Programmierspannung Uₚₚ ist hier gegenüber der Zeit aufgetragen. Da alle Zellen eine gewisse Mindestprogrammierzeit brauchen, kann zunächst zwischen den Zeiten t₀ und t₁ ein längerer Programmierimpuls erfolgen. Nach Ablauf dieser "Vorlaufzeit" wird die Programmierung im Zeitraum zwischen t₁ und t₂ unterbrochen und dann mit kurzen Programmierimpulsen fortgesetzt.

Die Fig. 4b zeigt parallel dazu den zeitlichen Verlauf des Ladungszustandes einer ersten ausgewählten Zelle in wiederum stark schematisierter Form. Der Ladezustand nimmt mit Anlegen der Programmierspannung zu und hat hier nach dem Zeitpunkt t₉ die Schwelle überschritten, die den Sperr- bzw. Öffnungszustand der Ladetransistors bestimmt. Die Steigung dieser Kurve ist abhängig von der Größe des Tunnelstroms, in die, wie bereits erwähnt, die Parameter wie Dicke der Oxidschicht, Reinheit, effektive Tunnelfläche etc. eingehen.

Die Fig. 4c zeigt analog dazu den Ladungszustand einer zweiten Zelle in Abhängigkeit von der Zeit. Diese Zelle erreicht bereits zum Zeitpunkt t₅ den Schwellwert Qₛ. Aufgrund von Herstellungstoleranzen, andersgearteten strukturellen Gegebenheiten im Material und im Aufbau dieser Zelle etc. ist hier der Tunnelstrom größer und der Ladezustand damit früher erreicht. Um die einzelnen Zeitpunkte festzustellen, in denen die Zellen einer Speicherzelle umkippen, wird der Zustand der Speicherzelle jeweils zwischen den einzelnen Programmierimpulsen festgestellt.

Wie in Fig. 4d gezeigt, wird die Speicherzeile zu den Zeitpunkten l₁, l₂ usw. ausgelesen, wobei diese Zeiten in den Programmierimpulspausen liegen.

Die Fig. 4e zeigt dann, daß in der ersten Speicherzelle erst zum Lesezeitpunkt l₅ eine logische "1" gemeldet wird, während die zweite Zelle die logische "1" bereits zum Lesezeitpunkt l₃ anzeigt (Fig. 4f).

Der Einfachheit halber sind in dieser hier stark schematisierten Darstellung nur einige Programmier- und Leseimpulse gezeigt. Tatsächlich wird man die Gesamtprogrammierzeit, die bei E²PROM-Zellen bei ca. 10 bis 50 ms liegt, in vorzugsweise 100 bis 200 Programmierimpulse aufteilen, um den Zeitpunkt des Umschaltens der einzelnen Zellen mit der erforderlichen Auflösung erfassen zu können.

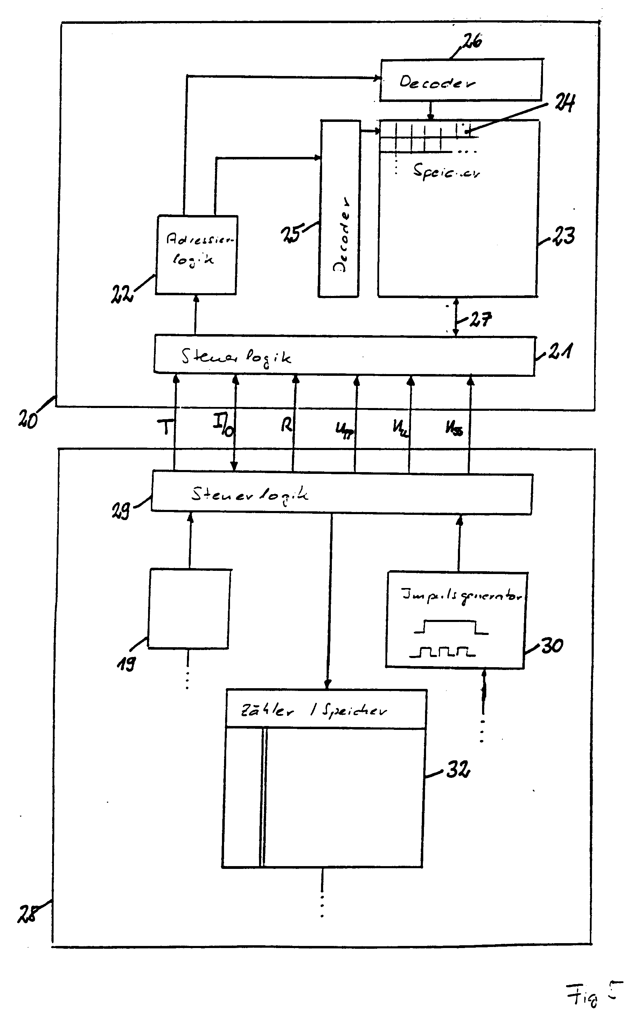

Die Fig. 5 zeigt das Blockschaltbild zur Karte und zum Peripheriegerät mit den für den Meßvorgang erforderlichen Einheiten. Die Karteneinheit 20 verfügt über eine Steuerlogik 21, der eine Adressierlogik 22 zur selektion Ansteuerung der einzelnen Speicherzellen 24 des Speichers 23 nachgeschaltet ist. Die Ansteuerung erfolgt über entsprechende Dekoder 25, 26, die die jeweilig anzusprechende Zeile bzw. Spalte der Speichermatrix bestimmen. Über eine Datenleitung 27 werden die Daten von der Steuerlogik in den Speicher eingegeben bzw. ausgelesen.

Die hier gezeigte Karte verfügt z. B. über sechs externe Anschlüsse T (Takt), I/O (Datenein-/Ausgabe), R (Reset), Uₚₚ (Programmierspannung), U_{cc} (Versorgungsspannung), Uₛₛ (Masse). Bei manchen Karten wird die Programmierspannung Uₚₚ intern erzeugt, so daß sich eine externe Versorgung erübrigt.

Diese externen Anschlüsse sind mit der Steuerlogik 29 des Peripherie- bzw. Prüfgeräts 28 verbunden. Über diese Steuerlogik werden die von anderen Einheiten 19 kommenden Befehle und Daten (Schreib-/Löschbefehle, Adressen etc.) an die Karte weitergegeben. Das Peripheriegerät verfügt weiterhin über einen Impulsgenerator 30 zur Erzeugung von Schreib- und Löschimpulsen, die in ihrer Länge wiederum programmierbar sind. Schließlich weist das Peripheriegerät noch eine Zähler- und Speichereinheit 32 auf, in der die von der Karte ausgelesenen Daten erfaßt werden.

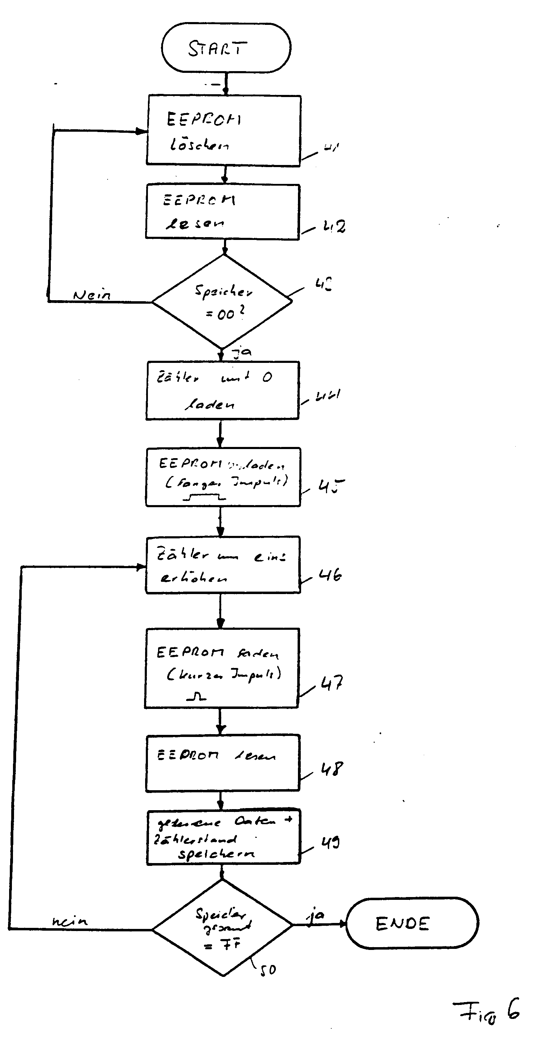

Die Fig. 6 zeigt den zeitlichen Ablauf für die Messung in Form eines Flußdiagramms. Zu Beginn des Verfahrens werden die auszuwertenden Speicherzellen zunächst gelöscht (41). Der Löschvorgang wird durch nochmaliges Auslesen (42) überprüft und falls der Speicher nicht im erforderlichen Umfang gelöscht wurde, wird der Löschvorgang wiederholt (43). Andernfalls wird der in der Einheit 32 befindliche Zähler mit 0 geladen (44) und die Speicherzelle zunächst mit einem länger andauernden Programmierimpuls vorprogrammiert (45). Die Zeitdauer dieses Vorprogrammierimpulses ist so gewählt, daß sie für ein Umklappen der Speicherzellen in dieser Zeile nicht ausreichend ist. Dies kann in einem nachfolgenden Schritt durch nochmaliges Auslesen der Speicherzelle geprüft werden und das tatsächlich gelesene Signal, gekoppelt mit dem Zählerstand 0 in den Speicher der Einheit 32 eingetragen werden. Im nachfolgenden Schritt wird der Zählerstand um eins erhöht (46) und der Programmiervorgang über eine kurze Zeitdauer fortgesetzt (47). Im Anschluß an diesen kurzen Programmierimpuls wird die Speicherzelle wieder ausgelesen (48) und der Dateninhalt zusammen mit dem aktuellen Zählerstand in der Speichereinheit 32 eingetragen (49). Die Schritte 46 bis 49 werden so oft wiederholt, bis sämtliche Speicherzellen den neuen Zustand (= Ladezustand) erreichen (50). Die aus diesem Meßvorgang gewonnenen Daten können beispielsweise in Tabellen dargestellt werden.

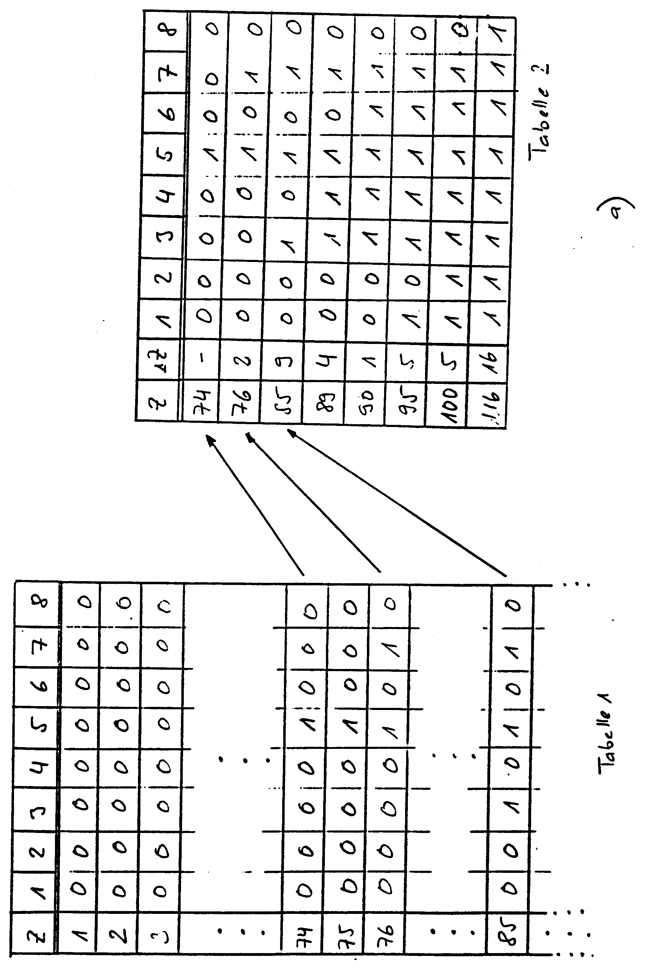

In der Fig. 8 sind die Meßergebnisse, die sich bei der erfindungsgemäßen Auswertung einer Speicherzeile eines E²PROM's ergaben, tabellarisch dargestellt. Die Tabelle 1 zeigt in der ersten Spalte die Zählerstände und daran anschließend den bei diesem Zählerstand ausgelesenen Dateninhalt der betreffenden Speicherzeile. Die acht Stellen entsprechen den acht Speicherzellen dieser Speicherzeile, auch Wort genannt. Die Tabelle zeigt, daß bis zum Zählerstand 73 noch keine Umprogrammierung erfolgte und erst beim 74sten Durchlauf, also bei Zählerstand 74, die vierte Speicherzelle auf logisch "1" schaltete. Nach zwei weiteren Durchläufen klappte dann auch die Speicherzelle 6 bei Zählerstand 76 um. Auf diese Weise wird der Zeitpunkt des Umklappens für jede Speicherzelle registriert. Da nur die Datensätze von Interesse sind, bei denen effektiv eine Änderung des Speicherzustandes erfolgt ist, kann diese Tabelle direkt oder auch nachträglich in ihrem Umfang reduziert werden.

Die Tabelle 2 der Fig. 8 zeigt eine derart reduzierte Datenerfassung. Registriert werden hier nur die Zählerstände, bei denen eine der Speicherzellen umklappt. Neben dem aktuellen Speicherinhalt ist zusätzlich in einer weiteren Spalte auch die Differenz zwischen den Zählerständen aufgelistet, bei denen ein Umklappen erfolgte. Bei dem hier ausgewerteten Speicherwort fand ein Umklappen, also bei den Zählerständen 74, 76, 85, 89, 95, 100 und 116 statt, wobei die Speicherzellen (1 bis 8) dieses Speicherworts in folgender Reihenfolge umklappten: 5, 7, 3, 4, 6, 1, 2, 8.

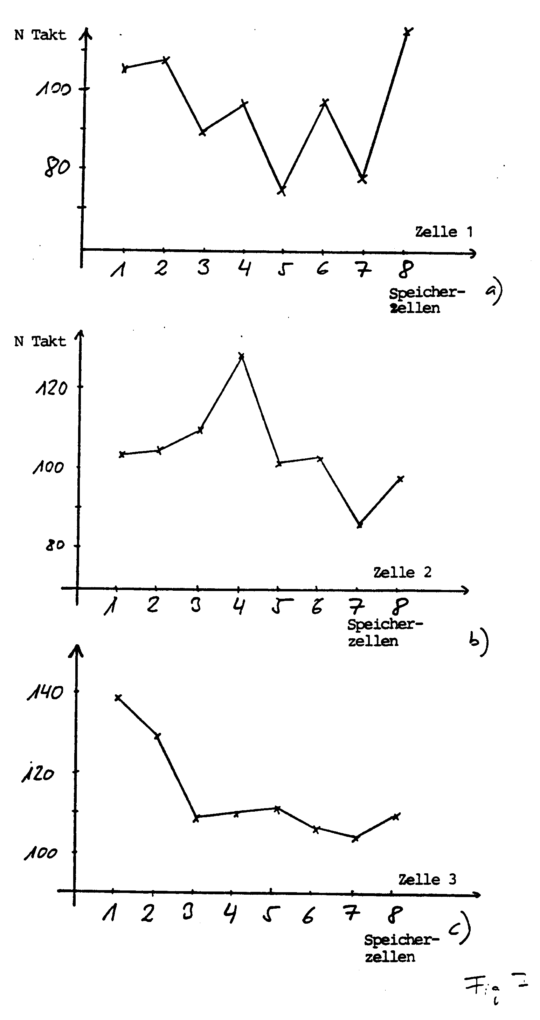

Die Fig. 7a zeigt dieses Meßergebnis in einer graphischen Darstellung, wobei auf der Abszisse die Speicherzellen 1 bis 8 aufgetragen sind und auf der Ordinate der Zählerstand, bei dem die jeweilige Speicherzelle umprogrammiert wurde. Dieses "Schaltmuster" ist ein für jedes Speicherwort charakteristisches Schaltbild und verändert sich von Wort zu Wort, behält aber ihr charakteristisches Schaltbild bei jedem neuerlichen Programmiervorgang bei.

Es stellt damit ein jedes Speicherwort kennzeichnendes typisches und in seiner Grundaussage von außen nicht beeinflußbares Merkmal. Da Umweltparameter, wie z. B. die Temperatur, auf alle Zellen in gleichem Maße wirken, führen diese Parameter lediglich zu einer Gesamtverschiebung in der Ordinatenhöhe und gegebenenfalls einer Stauchung oder Streckung im Kurvenverlauf, können aber das charakteristische Profil nicht verändern.

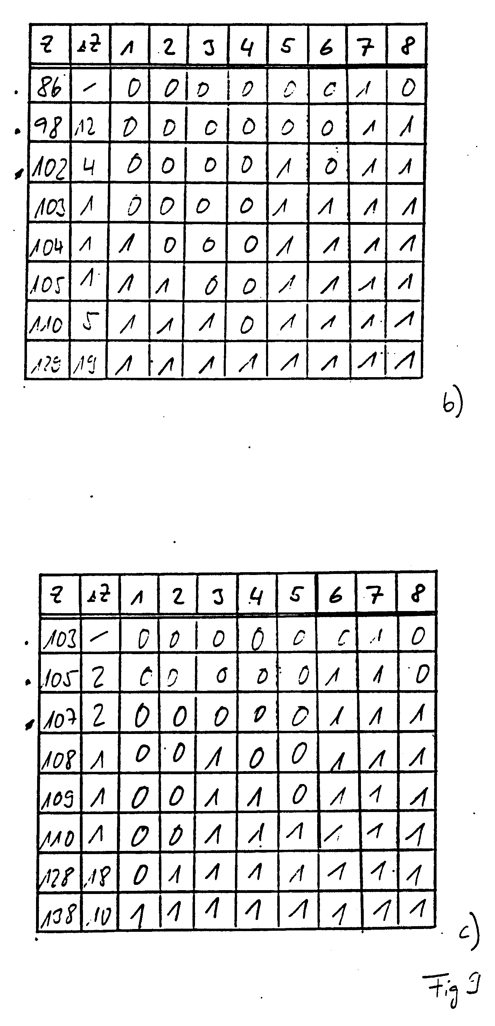

In den Fig. 7b und c sind diese charakteristischen Schaltmuster für zwei weitere Speicherzellen dargestellt. Die Meßdaten zu diesen Speicherzellen sind in den in Fig. 9 dargestellten Tabellen zusammengefaßt.

Für eine nachfolgende Echtheitsprüfung des Speichers werden nun Kenndaten dieser Schaltbilder abgespeichert, wobei es hier je nach Anwendungsfall verschiedene Möglichkeiten gibt. So kann es bereits ausreichend sein, lediglich die Reihenfolge des zeitlichen Umklappens der Speicherzellen in einer Zeile zu notieren. Dies wäre, wie vorab bereits erwähnt, bei der in Tabelle 1 bzw. Fig. 7a gezeigten Speicherzelle die Zahlenfolge 5, 7, 3, 4, 6, 1, 2, 8 oder es können zum anderen neben dieser Zahlenfolge auch noch die Zeitdifferenzen zusätzlich registriert werden. Dies ergäbe bei dem genannten Beispiel dann folgende Zahlenreihe:
(5, 0); (7, 2); (3, 9); (4, 4); (6, 1); (1, 6); (2, 5); (8, 16),
wobei die erste Ziffer dieser Zahlenpaare die Speicherzelle bezeichnet und die zweite Ziffer die Differenz zum vorhergehenden Umprogrammiervorgang angibt. Da bei Messungen zu unterschiedlichen Zeitpunkten sich die Zählerstände bzw. diese Differenzen - wie bereits erwähnt - aufgrund von Umwelteinflüssen, wie z. B. der unterschiedlichen Umgebungstemperatur, ganzheitlich verschieben können, können bei der Verarbeitung der Daten bzw. bei der Vergleichsbestimmung derartige Verschiebungen durch geeignete Maßnahmen (Quotientenbildung, Normierung etc.) eliminiert werden. Durch bekannte Korrelationsberechnungen kann z. B. die Ähnlichkeit des aktuell gemessenen Schaltmusters zum gespeicherten Schaltmuster eindeutig festgestellt werden.

Ein weiteres charakteristisches Merkmal eines E²PROM-Speichers wäre z. B. auch die Registrierung von Speicherzellen, vorzugsweise mehrerer Speicherwörter, die nahezu gleichzeitig umklappen. Es wäre z. B. bei den in Fig. 8 bzw. 9 gezeigten Speicherzellen die Zellen 4 und 6 für das erste Speicherwort, die Zellen 1, 2, 6 des zweiten Speicherworts und die Zellen 3, 4 und 5 des dritten Speicherworts.

Je nach Anwendungsfall können also bestimmte Kenndaten registriert werden, wobei mit diesen Kenndaten selbstverständlich auch die Adresse der auszuwertenden Speicherzellen registriert werden muß. Da der Speicher selbst eine Vielzahl von Speicherzeilen umfaßt, kann die Auswahl, welche der Speicherzellen nun für die Echtheitsbestimmung herangezogen wird, willkürlich oder auch nach einem geheimen Code erfolgen, so daß Außenstehende nicht in Erfahrung bringen können, welche der Speicherzellen nun bei der Echtheitsbestimmung auszuwerten ist. Die Auswahl kann sich auch nach dem Schaltmuster der Speicherzeilen richten, so daß z. B. nur die Speicherzeilen ausgewertet werden, die ein entsprechend stark strukturiertes Schaltmuster aufweisen, während andere Speicherzeilen, bei denen die Speicherzellen alle innerhalb eines sehr kurzen Zeitraums umklappen, aus dieser Auswahl ausgeschlossen werden.

Notiert man z. B. nur die zeitliche Reihenfolge des Umklappens, so ist darauf zu achten, daß zwei Zellen, die nahezu gleichzeitig umklappen, bei einer abermaligen Messung in ihrer Reihenfolge vertauscht sein können. Schon alleine aufgrund der Toleranzen in der Lesespannung kann es nämlich vorkommen, daß die Speicherzelle einmal als durchgeschaltet und ein andermal als gesperrt gewertet wird.

Gemäß einem anderen Meßverfahren wird z. B. zunächst die durchschnittliche Programmierzeit ermittelt, die notwendig ist, um etwa die Hälfte aller Speicherzellen eines Speicherworts umzuprogrammieren. Liest man den Speicherinhalt nach dieser "halben" Programmierzeit aus, so hat der Speicherinhalt ein für dieses Wort typischen Wert. Bei dem Speicherwort mit dem Schaltungsmuster, wie in Fig. 7a gezeigt, würde diese durchschnittliche Programmierzeit ca. die Zeit von 95 Taktimpulsen entsprechen. Lädt man dieses Speicherwort nach vorheriger Entladung über diesen Zeitraum, der nun nicht getaktet werden muß, so ergibt sich beim nachträglichen Auslesen des Speicherworts folgende Binärinformation: 1, 1, 0, 1, 0, 1, 0, 1, d. h. daß die Speicherzellen 1, 2, 4, 6, und 7 umgeklappt sind, während die Speicherzellen 3, 5 und 7 noch ihren ursprünglichen Zustand beibehalten. Verringert oder vergrößert man die Lesespannung, so kann zusätzlich noch festgestellt werden, daß die Speicherzellen 4 und 6 gerade im Grenzbereich liegen, da sie je nach Lesespannung den gesperrten bzw. nicht gesperrten Zustand des Speichertransistors melden werden.

Das hier vorgestellte Verfahren zur Auswertung der Programmierzeit einzelner E²PROM-Speicherwörter hat insbesondere den Vorteil, daß keine Analogdaten verarbeitet werden müssen und daß der Dialog zwischen dem Prüfgerät und dem Chip über die ohnehin vorhandenen externen Anschlußleitungen erfolgen kann. Zusätzliche Geräte für eine z. B. optische Abtastung sind daher nicht erforderlich. Man hat damit ein einfach durchführbares Meßverfahren zur Bestimmung einer individuellen Eigenschaft eines integrierten Schaltkreises, das jeden Schaltkreis in unveränderbarer und eindeutiger Weise identifiziert.

Im Nachfolgenden werden Systembeispiele gegeben, bei denen die Karte unter Einbeziehung individueller Kenndaten des integrierten Schaltkreises im on- und/oder off-line-Betrieb auf Echtheit geprüft werden kann.

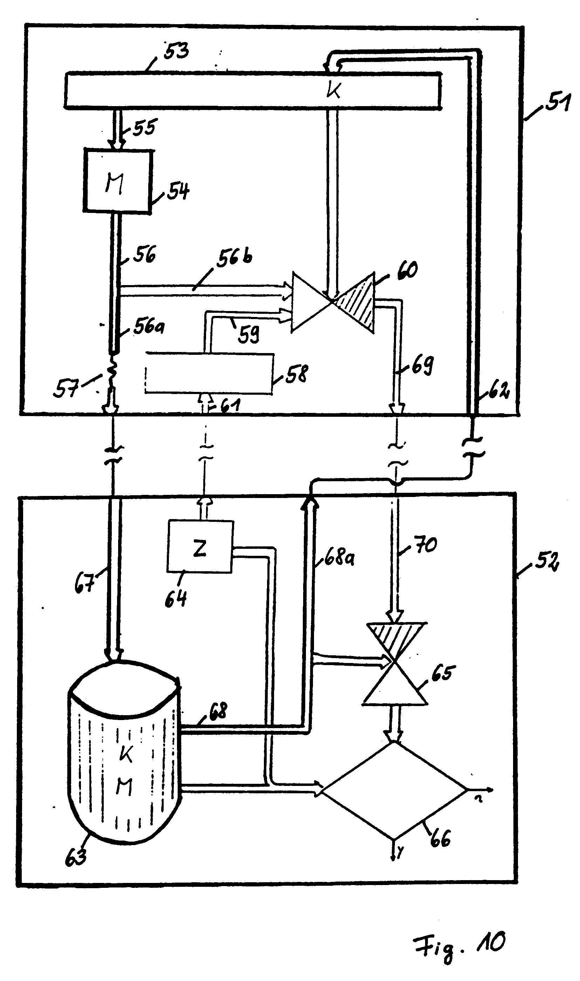

Die Fig. 10 zeigt schematisch die wichtigen Elemente einer Karte bzw. des Schaltkreises einer Karte 51, die zu ihrer Initialisierung mit einer Zentrale 52 verbunden ist.

Die Karte enthält einen Speicher 53, der aus einem von außen zugängigen und nicht zugängigen Bereich für die Speicherung von vertraulichen Informationen, Schlüsseln usw. besteht. Die Karte weist des weiteren einen Meßkreis 54 auf für die Bestimmung der individuellen Kenndaten, wie z. B. der Programmierzeiten von E²PROM-Zellen des Speichers 53. Der Meßschaltkreis 54 ist hierzu mit dem Speicher 53 verbunden und kann zusätzlich Verarbeitungseinrichtungen für die Aufarbeitung der gemessenen Daten, deren interne Prüfung usw. aufweisen. Über einen in der Fig. 10 nicht gezeigten Steuerschaltkreis kann dieser Meßschaltkreis 54 auch auf die Auswahl bestimmter auszuwertender E²PROM-Zellen programmiert werden. Vom Meßschaltkreis führt eine Leitung 56-56a zum Ausgang, wobei die Leitung 56a eine nachträglich zerstörbare Fuse 57 enthält. Diese Fuse kann auch durch Setzen eines entsprechenden Sicherungsbits in einem extern nicht zugängigen und unveränderbaren Speicher ersetzt werden, das die Ausgabe der Kenndaten kontrolliert und insbesondere nach dem Initialisierungsvorgang unterbindet. Derartige Mittel sind im Prinzip z. B. aus der DE-AS 11 14 049 bekannt. Eine zweite Leitung 56-56b führt zu einer Verschlüsselungseinrichtung 60, die sich ebenfalls in der Karte befindet. Weiteres Element der Karte ist ein Register 58, das über eine Leitung 59 ebenfalls mit der Verschlüsselungseinheit 60 verbunden ist. Eine erste externe Zugangsleitung 61 führt zu diesem Register 58 eine zweite 62 zum Datenspeicher 53. Alle genannten elektronischen Einheiten sind vorzugsweise Bestandteile einer integrierten Schaltungseinheit.

Die Zentrale verfügt über einen Hauptspeicher 63, einen Zufallszahlengenerator 64, eine Verschlüsselungseinheit 65 und einen Vergleicher 66.

Bei der Initialisierung der Karte werden die individuellen Kenndaten M, z. B. die individuell unterschiedlichen Programmierzeiten bestimmter E²PROM-Speicherzellen, von der Meßeinrichtung 54 ermittelt und über die Leitung 56-56a an die mit der Chipkarte verknüpfte Zentrale gegeben. Dort werden die Kenndaten M über die Leitung 67 an den Hauptspeicher übertragen und in einer gesicherten Umgebung abgespeichert. Im Rahmen dieser Initialisierung, die gleichzeitig mit der Personalisierung der Karte durchgeführt werden kann, bei der die benutzerbezogenen Daten und die für die Benutzung notwendigen Programme in der Karte gespeichert werden, wird gleichzeitig ein Schlüssel K von der Zentrale in den Speicher der Karte übertragen. Die Schlüsselübertragung erfolgt über eine gesicherte Leitung 68-68a-62 zum Speicher der Karte. Dieser Schlüssel K dient dann später zur Absicherung der Kommunikation zwischen Karte und Zentrale. Nach dem Initialisierungsvorgang wird in der Karte die Leitung 56a durch Zünden der Fuse 57 unterbrochen, so daß die von der Meßeinrichtung 54 gewonnenen Kenndaten nur noch an die Verschlüsselungseinheit 60 über die Leitung 56b gelangen können und nicht mehr extern abrufbar sind.

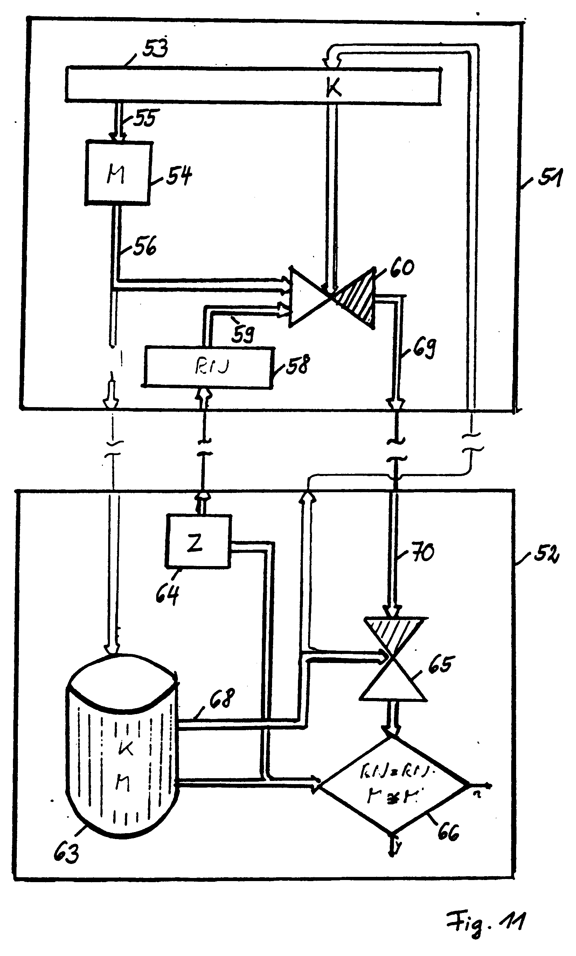

Die Fig. 11 zeigt die Karte und die Zentrale im Modus der Kartenverifizierung, die im Rahmen einer Transaktion stattfindet. Bei dieser on-line-Verifizierung bestimmt die Karte wiederum durch die interne Meßeinrichtung 54 die individuellen Kenndaten des Speichers 53 und überträgt die daraus gewonnenen Daten an die Verschlüsselungseinheit 60. An einen zweiten Eingang wird über die Leitung 59 eine dynamische zeitvariable Größe, z. B. eine von dem Zufallszahlengenerator 64 der Zentrale erzeugte Zufallszahl RN, die in dem Register 58 zwischengespeichert werden kann, zur Verschlüsselung angelegt. Anstatt einer Zufallszahl können auch die Uhrzeit oder die Transaktionsdaten als ständig variierende Größe in die Verschlüsselung einfließen. Die Verschlüsselung erfolgt in der Einheit 60 anhand des gespeicherten Schlüssels K und das Schlüsselergebnis wird über die Leitung 69-70 an die Entschlüsselungseinheit 65 der Zentrale übermittelt und dort mit dem Schlüssel K bzw. bei Verwendung eines asymmetrischen Algorithmus mit einem entsprechenden Schlüsselpendant K′ entschlüsselt. Die daraus gewonnenen Kenndaten M′ werden dann mit den gespeicherten Kenndaten M auf Identität bzw. Ähnlichkeit geprüft. Über einen Vergleich der entschlüsselten Zufallszahl mit der von der Zentrale generierten Zufallszahl kann die Systemzugehörigkeit geprüft werden, d. h. festgestellt werden, ob die Karte über den richtigen Schlüssel K verfügt. Sollte sich bei dieser Prüfung herausstellen, daß zwar bezüglich der Zufallszahl eine Übereinstimmung vorliegt, daß aber die Kenndaten M unzutreffend sind, d. h. die Zentrale zu den betreffenden Benutzerdaten andere Kenndaten M gespeichert hat, so handelt es sich bei dieser Karte entweder um eine Duplizierung oder die Karte wurde mit falschen Benutzerdaten ausgestattet. Im ersten Fall, der Duplizierung, wird eine nachgeahmte Karte mit den Benutzerdaten und weiteren Daten einer echten und gültigen Karte geladen. Da aber die nachgeahmte Karte einen anderen Schaltkreis mit anderen, von der echten Karte abweichende, individuelle Kenndaten aufweist, wird ein derartiges Duplikat aufgrund der unterschiedlichen Kenndaten als solches erkannt werden.

Im zweiten Fall werden in einer echten, zulässigen Karte die Benutzerdaten ausgetauscht, so daß z. B. fremde Konten belastet werden. Auch wenn der Betrüger hier z. B. seine Karte mit den Daten eines zulässigen Benutzers ausgestattet hat, so wird diese Manipulation doch erkannt werden, da der Vergleich Benutzerdaten - Kenndaten auch in diesem Fall negativ sein wird.

Die Echtheitsprüfung über eine on-line-Verbindung kann auch mit Hilfe eines Publik-Key-Algorithmus durchgeführt werden, wobei vorzugsweise die Karte 51 mit dem öffentlichen Schlüssel ausgestattet wird und die Zentrale den zugehörigen geheimen Schlüssel in ihrem Speicher behält. Damit kann jede Karte mit diesem öffentlichen Schlüssel ihre intern ermittelten Kenndaten verschlüsseln und nur die Zentrale kann mit Hilfe des geheimen Schlüssels die Kenndaten wieder entschlüsseln und mit den dort gespeicherten Daten, wie oben beschrieben, vergleichen.

Die von der Zentrale übertragene Zufallszahl kann in einer Variante auch zur Auswahl der auszuwertenden E²PROM-Zellen herangezogen werden. Hierfür wird der für die Kenndatenermittlung vorgesehene Speicherbereich, der eine oder mehrere Speicherzeilen mit jeweils 8 Speicherzellen erfassen kann, gelöscht, so daß alle Speicherzellen dieses Bereichs den gleichen logischen Wert, z. B. "0" einnehmen. In diese Speicherzeile(n) wird die in Binärform vorliegende Zufallszahl RN (z. B. 01100101) geladen, wobei die Programmierzeiten der umzuladenden Zellen jeder Speicherzeile registriert werden (im gegebenen Beispiel sind dies die 2., 3., 6. und 8. Zelle). Diese Zeiten werden dann als individuelle Kenndaten verschlüsselt an die Zentrale übertragen. Die Zentrale, die die Programmierzeiten sämtlicher Speicherzellen gespeichert vorliegen hat, vergleicht die gespeicherten Zeiten mit den übertragenen Zeiten derjenigen Zellen, die in Abhängigkeit der Zufallszahl umprogrammiert wurden.

Damit sind selbst die individuellen Kenndaten von Transaktion zu Transaktion unterschiedlich, wodurch das System für Außenstehende noch undurchsichtiger und für Manipulationen noch unzugänglicher wird.

In manchen Fällen, z. B. bei Kreditkarten, ist eine sofortige Verifikation der Echtheit der Karte über die Zentrale noch während der Transaktion nicht unbedingt erforderlich und es genügt eine spätere Überprüfung, z. B. im Rahmen des Clearing, ob bei dieser Transaktion eine registrierte echte Karte vorgelegen hat. In diesem Fall wird die Karte bei der Transaktion nur dazu benutzt, intern die Kenndaten mit den in die Karte eingegebenen Transaktionsdaten (Kaufbetrag, Datum, Laufnummer etc.) zu verschlüsseln. Das sich daraus ergebende Verschlüsselungsergebnis wird auf dem Verkaufsbeleg notiert bzw. bei elektronischer Verkaufsabwicklung dem Transaktionsdatensatz angehängt. Bei Bedarf bzw. beim Clearing kann dan jederzeit durch die Zentrale die Richtigkeit der Daten festgestellt und bei Unstimmigkeiten eindeutig klargestellt werden, ob bei dieser oder jener Transaktion eine echte Karte oder ein Falsifikat benutzt wurde.

Für die Eingabe der Transaktionsdaten bzw. die Ausgabe der verschlüsselten Daten kann die Karte in ein entsprechendes Terminal mit Eingabetastatur und Anzeige eingegeben werden oder selbst mit einer Tastatur und einem Display ausgestattet sein.

Die Karte kann aber auch zusätzlich oder auch nur ausschließlich für eine off-line-Verifizierung verwendet werden.

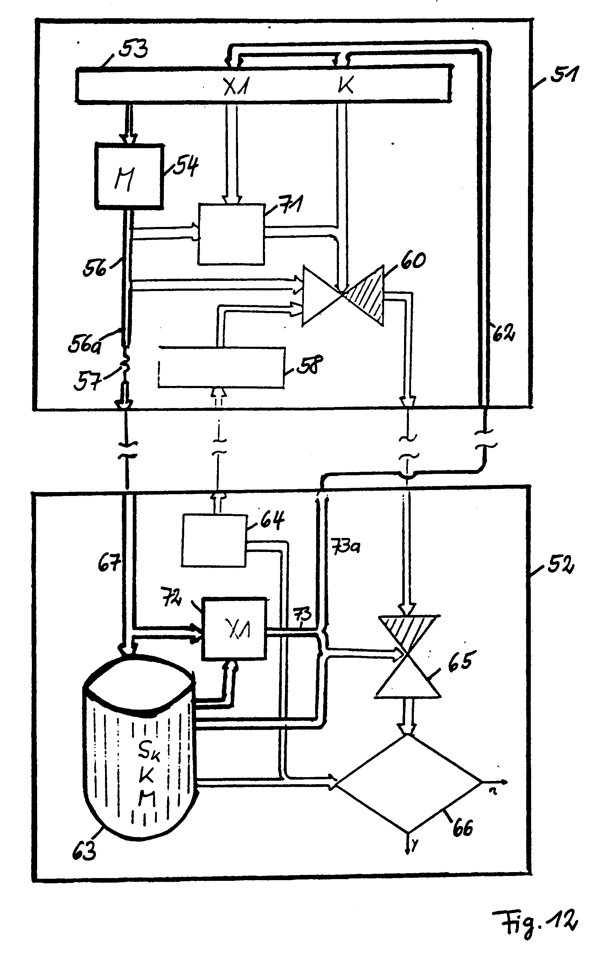

Die Fig. 12 zeigt wieder in stark schematisierter Form eine Karte und die Zentrale in der Initialisierungsphase, bei der die Karte sowohl für eine off-line-Prüfung als auch für eine on-line-Prüfung mit den entsprechenden Schlüsseln ausgestattet wird. Die Karte 51 enthält hierzu heben dem Speicher 53, der internen Meßeinrichtung 54, der Verschlüsselungseinheit 60, dem Register 58 eine zusätzliche Einheit 71, die, wie später noch zu erläutern ist, zur Generierung eines Schlüssels verwendet wird. Die Zentrale verfügt ebenfalls über eine derartige Einheit 72 zur Schlüsselgenerierung.

In der Initialisierungsphase werden von der internen Meßeinrichtung in der Karte die individuellen Kenndaten M bestimmt und über die Leitungen 56, 56a und 67 an den Hauptspeicher der Zentrale übertragen. Zusätzlich werden hier diese Kenndaten in die Schlüsselgenerierungseinheit 72 der Zentrale eingegeben. In dieser Einheit wird, ausgehend von einem fest vorgegebenen Schlüssel S_{K}, ein Offset X1 derart bestimmt, daß sich in Verknüpfung mit den Kenndaten wieder der vorgegebene Schlüssel S_{K} bestimmen läßt. Obwohl die Kenndaten M naturgemäß von Karte zu Karte unterschiedlich sind, lassen sich die Karten mit Hilfe dieses Offsets so konzipieren, daß jeweils der vorgegebene einheitliche Schlüssel S_{K} intern erzeugt wird. Dieser Offset X1 wird von der Schlüsselformierungseinheit 72 über die Leitungen 73-73a-62 in den Speicher 53 der Karte 51 eingetragen.

Insbesondere bei der off-line-Verifizierung ist es vorteilhaft, einen Publik-Key-Algorithmus zu verwenden, wobei in diesem Fall der geheime Schlüssel S_{K} in der Karte unter Zuhilfenahme der Größen M und X1 erzeugt wird. Der zum geheimen Schlüssel korrespondierende öffentliche Schlüssel Pk wird wird dann in den Terminals der Verkaufs-oder Transaktionsstellen gelagert.

Durch die beschriebene Schlüsselgenerierung kann eine Vielzahl von Karten mit nur einem Schlüssel auf Echtheit geprüft werden, was den Speicherbedarf in den Terminals des off-line-Systems erheblich reduziert und die Schlüsselverwaltung und -verteilung stark vereinfacht.

Zusätzlich kann die Karte auch mit einem Schlüssel K geladen werden, der dann, wie in Fig. 10 bzw. 11 gezeigt, bei der on-line-Verifizierung Anwendung findet.

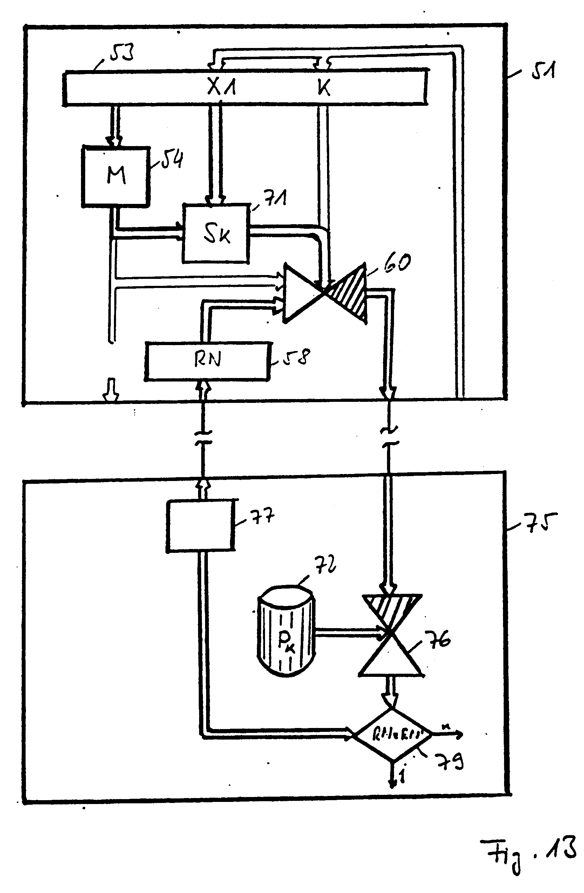

Die Fig. 13 zeigt in schematischer Form eine Karte 51 und ein Terminal 75 mit den für die off-line-Verifizierung der Karte notwendigen Einrichtungen. Bei jeder Transaktion oder Inanspruchnahme der Karte werden intern die individuellen Kenndaten bestimmt und nach Aufarbeitung und einer Vorabprüfung der Schlüsselbildungseinheit 71 der Karte zugeführt. Parallel dazu wird aus dem Speicher 53 der Offset X1 gelesen, der dann in Verknüpfung mit den Kenndaten M den für alle Karten einer bestimmten Gruppe einheitlichen geheimen Schlüssel S_{K} ergibt. Mit diesem Schlüssel S_{K} wird dann in der Verschlüsselungseinheit 60 eine vom Terminal oder anderweitig erzeugte Zufallszahl RN verschlüsselt und diese verschlüsselte Zufallszahl an das Terminal übertragen. Im Terminal 75 werden dann die übertragenen Daten in der Einheit 76 unter Zuhilfenahme des in einem Speicher 78 gelagerten öffentlichen Schlüssels entschlüsselt und in einem Vergleicher 79 mit der im Zufallszahlengenerator 77 erzeugten Zufallszahl verglichen. Die Identität dieser Daten bestätigt dann die Echtheit der Karte.

Gegegenüber bekannten Echtheitsprüfverfahren, bei denen für die Verschlüsselung der Zufallszahl nur elektronisch gespeicherte Schlüsseldaten verwendet werden, hat dieses Verfahren den Vorteil, daß der Schlüssel nur temporär in der Karte vorliegt, nämlich vom Zeitpunkt der Schlüsselbildung bis zur Beendigung der Verschlüsselung. Ansonsten ist nur der Offset in der Karte elektronisch gespeichert, dessen Kenntnis alleine aber nicht ausreichend ist, um den geheimen Schlüssel bestimmen zu können.

Da bei diesem Verfahren die Kenndaten als Schlüsseleingangsdaten verwendet werden, ist, wie eingangs bereits erwähnt, dafür zu sorgen, daß diese Kenndaten bei jeder Schlüsselbildung in identischer Form vorliegen. Diese Identität kann z. B. dadurch erreicht werden, daß in den Speicher zusätzliche Prüfziffern eingetragen werden, die gegebenenfalls eine Korrektur und Überprüfung der gemessenen und aufgearbeiteten Kenndaten gestatten.

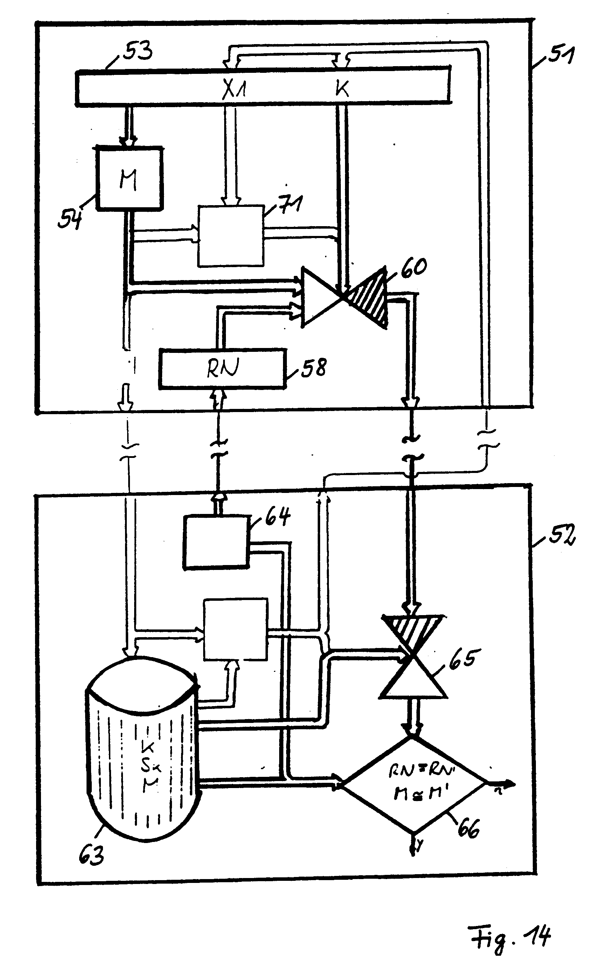

Sollte sich durch eine mit diesen Korrekturmitteln nicht mehr korrigierbare Veränderung der individuellen Kenndaten ergeben, so kann die gleiche Karte einer on-line-Prüfung unterzogen werden, wobei die Kenndaten wiederum, wie in Fig. 14 gezeigt, Eingangsdaten für die Verschlüsselung sind ggf. zusammen mit einer veränderlichen Größe. Diese veränderliche Größe kann wiederum eine Zufallszahl sein, die in einem Zufallsgenerator 64 der Zentrale erzeugt wird und an die Karte über Register 58 übertragen wird.

Die Kenndaten M sowie diese Zufallszahl RN werden dann in der Verschlüsselungseinheit 60 mit dem bei Initialisierung gespeicherten Schlüssel K verschlüsselt und an die Zentrale 52 übertragen. Die Zentrale entschlüsselt diese Daten mit dem ihr zur Verfügung stehenden gleichen Schlüssel K oder einem hierzu korrespondierenden Schlüssel und gewinnt damit die Kenndaten und diese Zufallszahl im Klartext zurück.

Die Kenndaten können dann mit dem in der Zentrale gespeicherten Kenndaten auf Übereinstimmung geprüft werden, wobei hier dann eindeutig festgestellt werden kann, in welchem Maß die entschlüsselten Kenndaten von den bei der Initialisierung gespeicherten Daten abweichen. Je nach Größe dieser Abweichung kann die Karte als echt oder als Duplikat oder Fälschung klassifiziert werden. Sind die übertragenen Kenndaten zwar ausreichend, um die Echtheit bejahen zu können, aber nicht ausreichend, um in reproduzierbarer Form unter Einbeziehung des Offsets den geheimen Schlüssel in der geforderten Form bilden zu können, so kann in der Zentrale ein neuer Offset berechnet werden, wobei die veränderten Kenndaten Berücksichtigung finden und diesser neue Offset zur Einspeicherung in den Speicher 53 der Karte an diese übertragen werden.

Als besonders vorteilhaft erweist es sich bei den beschriebenen Verfahren, daß in Verbindung mit der erfindungsgemäßen Echtheitsprüfung des Schaltkreises der Chipkarte in sehr flexibler Form die unterschiedlichsten Aufgaben gelöst werden können. So erhält man, wie in den Beispielen erläutert und je nach Anwendungsfall notwendig, sowohl die Möglichkeit der on-line- als auch off-line-Echtheitsverifikation. In der Praxis können diese beiden Möglichkeiten z. B. benutzt werden, indem Transaktionen erst ab einem bestimmten Transaktionswert und/oder lediglich im Falle erhöhter Verdachtsmomente einer on-line-Prüfung unterzogen werden. Auf diese Weise kann die Zahl der on-line-Echtheitsprüfungen gestuft dem Einzelfall angepaßt und somit auf ein Minimum reduziert werden. In reinen off-line-Systemen ist aber ebenfalls sichergestellt, daß weder mit Kartenduplikaten, noch mit verfälschten Kartendaten das System kompromittiert wird.

Im Herstellungsprozeß der Karten kann in gleicher Weise eine "gestufte Sicherheit" realisiert werden, in dem z. B. in den weniger gefährdeten Verfahrensschritten anstelle des individuellen Kartenmerkmals "M" lediglich ein allen Karten einer Charge oder eines Kartentyps gemeinsamer Transportcode Anwendung findet. Dieser aus der Chipkartentechnik an sich bekannte Transportcode, der ebenfalls eine mißbräuchliche Benutzung, allerdings ohne individuelle Echtheitsprüfung, verhindert, ermöglicht eine einfachere und schnellere Handhabung im Bereich des Chip- und Kartenherstellers. Erst bei der Kartenpersonalisierung wird der Transportcode gelöscht und gegen die Unique-Information "M" ausgetauscht, so daß ab diesem Zeitpunkt eine echte Individualisierung jedes einzelnen Chips bzw. jeder einzelnen Chipkarte erfolgt. Mit dieser Maßnahme werden neben der erhöhten Möglichkeit der Echtheitsprüfung zusätzlich auch die Phasen "Kartenherstellung" und "Kartenbenutzung" klar voneinander getrennt, so daß auch die während der Kartenherstellung benötigten Prüfgeräte und deren Software nicht mißbräuchlich in der Benutzerebene anwendbar sind.

Da die Unique-Information "M" von der Prüfgeräteseite nur, wenn überhaupt, begrenzt zugänglich ist, auf keinen Fall aber verändert werden kann, ist sichergestellt, daß die Individualisierung des Chips bzw. der Karte eindeutig und nicht manipulierbar ist. Datenveränderungen und Chipduplikate werden bereits in der niedrigsten Sicherheitsebene (off-line) eindeutig erkannt.

Da die Prüfung des Kartenmerkmals "M" chipintern erfolgt, sind hierfür keine gesonderten Sensoren in den Kartenprüfgeräten notwendig. Die im System benötigte Hardware ist deshalb trotz erhöhter Sicherheit einfacher aufgebaut.

Die Echtheitsprüfung baut erfindungsgemäß auf individuelle Eigenschaften des Chips auf. Bei der Verwendung von E²PROM-Speichern sind hierfür beliebige Speicherzellen bezüglich ihrer Ladezeiten verwendbar. Da die dafür herangezogenen Speicherzellen zwar vorher definiert sein müssen, im Prinzip aber völlig freizügig ausgewählt werden können, ist für Außenstehende nicht nachvollziehbar, welche Elemente des Speichers wie zu berücksichtigen sind. Dadurch erhält man eine optimale Tarnung der Unique-Information. Wegen der Nutzung chipinhärenter Eigenschaften erübrigt sich außerdem ein spezieller Generator zur Erzeugung derartiger Informationen.

Nutzt man für die Kartenechtheitsprüfung einen aus zwei Teilinformationen bestehenden Datensatz, wobei die eine Teilinformation auf Chiptoleranzen aufbaut (Unique-Information M) und die andere als sogenannter Offset bewußt erzeugt und abgespeichert wird, liegen beide Teilinformationen in unterschiedlicher physikalischer Form vor, wodurch das Ausspähen des gesamten Datensatzes ebenfalls unterschiedliche Technologien notwendig sind. Der Zugang zu den Gesamtinformationen wird somit weiter erschwert. Nutzt man die Individualität der E²PROM-Speicherzellen, kann der Offset auch direkt in die für die Unique-Information M herangezogenen Speicherzellen eingeschrieben und bei der Echtheitsprüfung der Reihe nach ausgelesen werden, so daß damit praktisch beide Teilinformationen voneinander getrennt in einem Speicher vorhanden sind. Diese Ausführungsform, bei der die Teilinformationen bei der Prüfung nacheinander "ausgelesen" werden, läßt eine besonders hohe Packungsdichte der Informationen zu und ermöglicht eine weitere Tarnung der Echtheitsinformation.

Unter Beibehaltung der erfinderischen Grundgedanken sind eine Vielzahl von Modifikationen und Kombinationen möglich. Besonders fälschungssicher ist das Konzept jedoch, wenn man darauf achtet, daß in der Benutzerphase die die "Chipeigenschaft" kennzeichnende Information nicht im Klartext aus der Karte auslesbar ist und ein im Chip vorgesehener geheimer Schlüssel SK auch tatsächlich geheim bleibt, d. h. von außen nicht zugänglich ist.

Realisiert man die für die Echtheitsprüfung notwendige Verschlüsselungslogik im Chip hardwaremäßig (festverdrahtete Logik), erhält man außerdem neben einem sehr kompakten Aufbau auch den Vorteil, daß keinerlei Verschlüsselungsinformationen auf den internen Datenbus des Chips gelangen, wodurch auch ein Abhören von Verschlüsselungsvorgängen unterbunden wird. Bei dieser Ausführungsform, bei der die Datenabarbeitung seriell abläuft, wird die Analyse der Abläufe zwangsläufig noch zusätzlich erschwert.

Verständlicherweise ist das beschriebene Echtheitsprüfverfahren nicht nur auf die Echtheitsprüfung des Chips bzw. der Chipkarte beschränkt. Nutzt man die Karte nämlich in einem Sicherheitssystem, kann die richtige Kommunikation zwischen Terminal und Chiplogik in einem on-line-Verfahren auch zur Echtheitsidentifikation des Terminals etc. benutzt werden.

Selbst die Anwendung der Echtheitsprüfung in Verbindung mit reinen Speicherkarten, wie sie z. B. als Telefonkarten in öffentlichen Telefonnetzen inzwischen Verwendung finden, ist möglich. In diesem Fall werden die Karten-Nummern und die Echtheitsinformationen M in einer zentralen Liste gespeichert. Diese Informationen werden bei der Transaktion von der Karte abgerufen (Kontonummer) bzw. über eine im Transaktionsterminal (Telefonapparat mit Kartenleser) befindliche Meßeinrichtung ermittelt und mit den Zentraldaten verglichen. Bei einer derartigen Ausführungsform ist lediglich sicherzustellen, daß die in den Telefongeräten integrierten Kartenleser dem Zugriff Dritter entzogen sind, d. h. die Gerätehardware als gesichertes System betrachtet werden kann. Das Abhören der auf der Datenleitung befindlichen Informationen gibt in diesem Fall wenig Sinn und gefährdet das System in keiner Weise. Diese gilt insbesondere, solange Dienstleistungen als Gegenwert betroffen sind und die Werte der Einzeltransaktionen (Telefongespräche) einen erhöhten Aufwand auf seiten der Fälscher nicht rechtfertigen. Die Echtheitsprüfung der Speicherkarten stellt bei einem derartigen System in jedem Fall sicher, daß Kartenduplikate zweifelsfrei erkannt und auch unerlaubt personalisierte echte Karten im System nicht verwendbar sind, so daß durch derartige Maßnahmen nur reguläre echte Karten zur Anwendung kommen.

## Patentansprüche

1. Verfahren zur Echtheitsprüfung eines Datenträgers (1) mit wenigstens einem integrierten Schaltkreis (4), der Speicherund Logikeinrichtungen aufweist sowie Elemente (5) zur Einund Ausgabe von Daten, dadurch **gekennzeichnet,** daß eine allein durch den integrierten Schaltkreis bestimmte und für jeden Schaltkreis individuelle physikalische Eigenschaft ausgewertet und als jeden Schaltkreis kennzeichnendes Merkmal zu dessen Echtheitsbestimmung verwendet wird.

2. Verfahren zur Echtheitsprüfung eines Datenträgers nach Anspruch 1, dadurch **gekennzeichnet,** daß Eigenschaften ausgewertet werden, die aufgrund verfahrenstechnischer Toleranzen bei der Herstellung des integrierten Schaltkreises und/oder materialbedingter Toleranzen von Schaltkreis zu Schaltkreis zufällig variieren.

3. Verfahren zur Echtheitsprüfung eines Datenträgers nach Anspruch 2, wobei die Speichereinrichtung E²PROM-Speicher enthält, dadurch **gekennzeichnet,** daß die für die einzelnen Speicherzellen unterschiedlichen Programmierzeiten als den Schaltkreis kennzeichnendes Merkmal bestimmt werden.

4. Verfahren nach Anspruch 3, dadurch **gekennzeichnet,** daß aus der Vielzahl der Speicherzellen einer Speichermatrix eine Gruppe vorzugsweise in Form von einer oder mehrerer Speicherzeilen für die Auswertung ausgewählt werden.

5. Verfahren nach Anspruch 4, dadurch **gekennzeichnet,** daß die Auswahl der auszuwerteten Speicherzellen willkürlich erfolgt.

6. Verfahren nach Anspruch 4, dadurch **gekennzeichnet,** daß die Auswahl der auszuwertenden Speicherzellen nach einer vorab festgelegten geheimen Vorschrift erfolgt.

7. Verfahren nach einem der Ansprüche 3 bis 6, dadurch **gekennzeichnet,** daß die für die Umprogrammierung von Speicherzellen erforderliche Programmierzeit über einen vorbestimmten Zeitraum in eine Sequenz von kurzfristigen Zeittakten aufgeteilt wird und der Programmiervorgang somit getaktet erfolgt und in den Programmierpausen zwischen zwei Takten der Speicherinhalt der auszuwertenden Speicherzellen ausgelesen wird.

8. Verfahren nach Anspruch 7, dadurch **gekennzeichnet,** daß für jede auszuwertende Speicherzeile die zeitliche Reihenfolge des Umprogrammiervorgangs der einzelnen Zellen dieser Speicherzeile als Kenndaten für diesen integrierten Schaltkreis gespeichert wird.

9. Verfahren nach Anspruch 8, dadurch **gekennzeichnet,** daß zusätzlich die zeitliche Differenz zwischen dem Umprogrammiervorgang zweier aufeinanderfolgender Zeilen oder ein entsprechendes Maß für diese zeitliche Differenz als weitere Kenndaten abgespeichert werden.

10. Verfahren nach Anspruch 7, dadurch **gekennzeichnet,** daß als Kenndaten die Daten derjeniger Speicherzellen einer oder mehrerer Speicherzeilen, gespeichert werden, die eine nahezu gleiche Programmierzeit aufweisen.

11. Verfahren nach einem der Ansprüche 3 bis 6, dadurch **gekennzeichnet,** daß für die Umprogrammierung der Speicherzellen einer Speicherzeile eine Programmierzeit gewählt wird, die für die Umprogrammierung aller Speicherzellen dieser Zeile nicht ausreichend ist und der Inhalt der Speicherzeile nach dieser verkürzten Programmierzeit als Kenndaten für den integrierten Schaltkreis dienten.

12. Verfahren nach Anspruch 11, dadurch **gekennzeichnet,** daß beim Auslesen der Speicherzelle die Lesespannung zur Feststellung derjeniger Speicherzellen variiert wird, die nach dieser verkürzten Programmierzeit gerade im Grenzbereich des Umprogrammiervorgangs liegen.

13. Verfahren nach Anspruch 2, dadurch **gekennzeichnet,** daß als Merkmal des integrierten Schaltkreises individuelle Daten aus der Eingangskennlinie des integrierten Schaltkreises ausgewertet werden.

14. Verfahren nach Anspruch 13, dadurch **gekennzeichnet,** daß aus der Kennlinie Daten ausgewertet werden, die aus der Nähe oder direkt aus den Durchbruchsbereich stammen.

15. Verfahren nach Anspruch 2, dadurch **gekennzeichnet,** daß als individuelles Merkmal die Oberflächenstruktur des integrierten Schaltkreises abgetastet und ausgewertet wird.

16. Verfahren nach Anspruch 15, dadurch **gekennzeichnet,** daß die nichtpolierte durch den Sägevorgang in ihrer Gestalt beeinflußte Seite des integrierten Schaltkreises abgetastet wird.

17. Verfahren nach Anspruch 1, dadurch **gekennzeichnet,** daß bei der Chipherstellung gezielt erzeugte Feinstrukturen als individuelle, den Schaltkreis kennzeichnende Eigenschaften ausgewertet werden.

18. Verfahren nach Anspruch 17, dadurch **gekennzeichnet,** daß diese gezielt erzeugten Feinstrukturen elektrisch leitfähige Beschichtungen mit einer wirren Flächenstruktur sind, die über eine Widerstandsmessung abtastbar ist.

19. Datenträger (1) mit wenigstens einem integrierten Schaltkreis (4), der Speicher- und Logikeinrichtungen aufweist sowie Element (5) zur Ein- und Ausgabe von Daten, dadurch **gekennzeichnet,** daß der Datenträger Meßrichtungen (54) zur Bestimmung einer alleine durch den intergrierten Schaltkreis bestimmten und für jeden Schaltkreis unterschiedlichen, physikalischen Eigenschaft aufweist, die für die Erstellung individueller Kenndaten (M) für den Schaltkreis nutzbar sind.

20. Datenträger nach Anspruch 19, dadurch **gekennzeichnet,** daß der Datenträger einen Mikroprozessor enthält.

21. Datenträger nach Anspruch 20, dadurch **gekennzeichnet,** daß der Datenträger Einrichtungen (60) zur Verschlüsselung von Daten enthält.

22. Datenträger nach Anspruch 21, dadurch **gekennzeichnet,** daß der Datenträger eine Einrichtung (71) zur Schlüsselbildung aus den von der Meßeinrichtung (54) gewonnenen Daten enthält.

23. Datenträger nach Anspruch 19, dadurch **gekennzeichnet,** daß die Meßeinrichtung (54) zur Auswertung von Eigenschaften des integrierten Schaltkreises geeignet ist, die aufgrund verfahrenstechnischer Toleranzen bei der Herstellung des integrierten Schaltkreises und/oder materialbedingter Toleranzen von Schaltkreis zu Schaltkreis variieren.

24. Datenträger nach Anspruch 23, dadurch **gekennzeichnet,** daß die Speichereinrichtung (53) E²PROM- Speicher enthält und daß die Meßeinrichtung (54) für die Bestimmung der unterschiedlichen Programmierzeiten einzelner Speicherzellen ausgelegt ist.

25. System zur Echtheitsprüfung eines Datenträgers nach einem der Ansprüche 19 - 24, dadurch **gekennzeichnet,** daß in einer Initialisierungsphase
- durch die Meßeinrichtung (54) die individuellen Kenndaten (M) des integrierten Schaltkreises bestimmt werden,
- diese Kenndaten (M) vom Datenträger (51) abgerufen werden und in einer gesicherten Umgebung (63) außerhalb des Datenträgers gespeichert werden,
- nach der Initialisierungsphase über im Datenträger vorgesehene Mittel (57) die Aussage dieser Kenndaten (M) in irreversibler Form unterbunden wird und
- in den Speicher (53) des Datenträgers eine als Schlüssel dienende Information (K) eingespeichert wird und im Rahmen der Echtheitsprüfung des Datenträgers
- die Kenndaten (M) im Datenträger intern bestimmt werden,
- diese Kenndaten mit dem gespeicherten Schlüssel (K) verschlüsselt werden,
- das Verschlüsselungsergebnis vom Datenträger abgerufen wird und
- in der Zentrale (52) entschlüsselt und mit den dort gespeicherten Daten verglichen werden.

26. System zur Echtheitsprüfung nach Anspruch 25, dadurch **gekennzeichnet,** daß in die Verschlüsselung der Kenndaten (M) eine von Transaktion zu Transaktion sich verändernde Größe (RN) einbezogen wird.

27. System zur Echtheitsprüfung nach Anspruch 25 oder 26, dadurch **gekennzeichnet,** daß die Überprüfung der Echtheit eines Datenträgers in einer davon entfernten Zentrale (52) on-line über Datenfernübertragungseinrichtungen erfolgt.

28. System zur Echtheitsprüfung eines Datenträgers nach Anspruch 25 oder 26, dadurch **gekennzeichnet,** daß das im Datenträger ermittelte Verschlüsselungsergebnis z. B. im Terminal oder auf einem anderen Datenträger (Verkaufsbeleg etc.) zwischengespeichert wird und zu einem späteren Zeitpunkt entschlüsselt und auf Richtigkeit geprüft wird.

29. System zur Echtheitsprüfung nach Anspruch 25, dadurch **gekennzeichnet,** daß symmetrische Schlüsselalgorithmen (DES) verwendet werden.

30. System zur Echtheitsprüfung nach Anspruch 25, dadurch **gekennzeichnet,** daß asymmetrische Schlüsselalgorithmen (Publik-Key, RSA) verwendet werden, wobei der öffentliche Schlüssel im Datenträger gespeichert ist.

31. System zur Echtheitsprüfung nach Anspruch 26, dadurch **gekennzeichnet,** daß die sich verändernde Größe (RN) bei der Bestimmung der individuellen Kenndaten (M), insbesondere bei der Auswahlbestimmung, der jeweils auszuwertenden E²PROM-Speicherzellen herangezogen wird.

32. System zur Echtheitsprüfung eines Datenträgers nach einem der Ansprüche 19 und 24, dadurch **gekennzeichnet,** daß in der Initialisierungsphase
- die Meßeinrichtung (54) die individuellen Kenndaten (M) bestimmt,
- diese Kenndaten (M) über denen nach außen gehende Leitung (56, 56a) von außen abgerufen werden,
- zu den Kenndaten (M) ausgehend von einem fest vorgegebenen Schlüssel (SK) eine Größe (Offset X1) bestimmt wird,
- dieser Offset (X1) in einen Speicher (53) des Datenträgers (51) abgelegt wird und daß im Rahmen der Prüfung des Datenträgers
- die Kenndaten (M) wiederum intern bestimmt werden,
- die Kenndaten (M) mit dem Offset mit einer im Datenträger enthaltenden Schlüsselbildungseinheit (71) zur Bildung des vorgegebenen Schlüssels (SK) verknüpft werden,
- dieser Schlüssel (SK) zur Verschlüsselung extern und/oder intern bereitgestellter Daten (RN) verwendet wird,
- das Verschlüsselungsergebnis vom Datenträger abgerufen wird und
- die abgerufenen Daten wieder entschlüsselt und auf Übereinstimmung mit den den zur Verschlüsselung bereitgestellten Daten geprüft werden.

33. System zur Echtheitsprüfung nach Anspruch 32, dadurch **gekennzeichnet,** daß zur Verschlüsselung eine sich von Transaktion zu Transaktion ändernde Größe (RN), z. B. eine Zufallszahl, verwendet wird.

34. System zur Echtheitsprüfung nach Anspruch 32 oder 33, dadurch **gekennzeichnet,** daß ein asymmetrischer Verschlüsselungsalgorithmus (Publik-Key) unter Verwendung eines geheimzuhaltenden Schlüssels (SK) und eines gegebenenfalls öffentlich zugänglichen Schlüssels (P_{K}) angewendet wird.

35. System zur Echtheitsprüfung nach Anspruch 34, dadurch **gekennzeichnet,** daß der geheime Schlüssel (S_{K}) im Datenträger gebildet wird und die Entschlüsselung der Daten außerhalb des Datenträgers mit dem öffentlichen Schlüssel (P_{K}) erfolgt.

36. System zur Echtheitsbestimmung nach Anspruch 32, dadurch **gekennzeichnet,** daß in der Initialisierungsphase zusätzlich ein weiterer Schlüssel (K) in den Speicher (53) des Datenträgers geladen wird, die Kenndaten (M) außerhalb des Datenträgers in einer gesicherten Umgebung (63) abgespeichert werden und daß die Echtheitsprüfung auch on-line unter Heranziehung dieses Schlüssels (K) und Verschlüsselung der von der Meßeinrichtung (54) ermittelten Kenndaten (M) erfolgt.

## Claims

1. A method for testing the authenticity of a data carrier (1) having at least one integrated circuit (14) with memory and logic means as well as elements (5) for inputting and outputting data, **characterized** in that a physical property determined solely by the integrated circuit and individual of each circuit is evaluated and used as a feature characterizing each circuit for determining the authenticity thereof.

2. The method for testing the authenticity of a data carrier of claim 1, **characterized** in that properties are evaluated which vary randomly from circuit to circuit due to tolerances of process technology during production of the integrated circuit and/or material-related tolerances.

3. The method for testing the authenticity of a data carrier of claim 2, whereby the memory means contains E²PROM memories, **characterized** in that the programming times differing for the individual memory cells are determined as a feature characteristic of the circuit.

4. The method of claim 3, **characterized** in that a group preferably in the form of one or more memory rows is selected for evaluation from the multiplicity of memory cells of a memory array.

5. The method of claim 4, **characterized** in that the selection of the memory cells to be evaluated is random.

6. The method of claim 4, **characterized** in that the selection of the memory cells to be evaluated is made according to a predetermined secret rule.

7. The method of any of claims 3 to 6, **characterized** in that the programming time required for reprogramming memory cells is divided over a predetermined time period into a sequence of brief time clocks and the programming process thus takes place in clocked fashion and the memory content of the memory cells to be evaluated is read out in the programming intervals between two clocks.

8. The method of claim 7, **characterized** in that the chronological order of the reprogramming process for the individual cells of each memory row to be evaluated is stored to characterize this integrated circuit.

9. The method of claim 8, **characterized** in that the skew time between the reprogramming processes of two successive rows or a corresponding measure of this skew time is additionally stored as a further characteristic.

10. The method of claim 7, **characterized** in that the data of those memory cells of one or more memory rows which have almost the same programming time are stored as characteristics.

11. The method of any of claims 3 to 6, **characterized** in that a programming time is selected for reprogramming the memory cells of a memory row which is insufficient for reprogramming all memory cells of this row, and the content of the memory row after this shortened programming time serves to characterize the integrated circuit.

12. The method of claim 11, **characterized** in that during the readout of the memory cell the reading voltage is varied to determine those memory cells which are just in the cutoff area of the reprogramming process after this shortened programming time.

13. The method of claim 2, **characterized** in that individual data from the input characteristic of the integrated circuit are evaluated as a feature thereof.

14. The method of claim 13, **characterized** in that data from the characteristic are evaluated which come directly from the breakdown area or from the vicinity thereof.

15. The method of claim 2, **characterized** in that the surface structure of the integrated circuit is scanned and evaluated as an individual feature.

16. The method of claim 15, **characterized** in that the unpolished side of the integrated circuit whose shape was affected by the sawing process is scanned.

17. The method of claim 1, **characterized** in that fine structures deliberately produced during manufacture of the chip are evaluated as individual properties characteristic of the circuit.

18. The method of claim 17, **characterized** in that these deliberately produced fine structures are electrically conductive coatings with a random surface structure capable of being scanned via a resistance measurement.

19. A data carrier (1) having at least one integrated circuit (4) with memory and logic means as well as elements (5) for inputting and outputting data, **characterized** in that the data carrier comprises measuring means (54) for determining a physical property determined solely by the integrated circuit and differing for each circuit, which can be used for creating individual characteristics (M) for the circuit.

20. The data carrier of claim 19, **characterized** in that the data carrier contains a microprocessor.

21. The data carrier of claim 20, **characterized** in that the data carrier contains means (60) for encrypting data.

22. The data carrier of claim 21, **characterized** in that the data carrier contains means (71) for key formation from the data obtained from the measuring means (54).

23. The data carrier of claim 19, **characterized** in that the measuring means (54) is suitable for evaluating properties of the integrated circuit which vary from circuit to circuit due to tolerances of process technology during manufacture of the integrated circuit and/or material-induced tolerances.

24. The data carrier of claim 23, **characterized** in that the memory means (53) contains E²PROM memories, and the measuring means (54) is designed to determine the different programming times of individual memory cells.

25. A system for testing the authenticity of the data carrier of any of claims 19 to 24, **characterized** in that in an initialization phase
the measuring means (54) determines the individual characteristics (M) of the integrated circuit,
these characteristics (M) are fetched from the data carrier (51) and stored in a protected environment (63) outside the data carrier,
after the initialization phase the output of these characteristics (M) is prevented in irreversible form via means (57) provided in the data carrier, and
a piece of information (K) serving as a key is stored in the memory (53) of the data carrier, and during the authenticity testing of the data carrier
the characteristics (M) are determined internally in the data carrier.
these characteristics are encrypted with the stored key (K),
the encryption result is fetched from the data carrier, and
decrypted in the host (52) and compared with the data stored there.

26. The authenticity testing system of claim 25, **characterized** in that a quantity (RN) varying from transaction to transaction is included in the encryption of the characteristics (M).

27. The authenticity testing system of claim 25 or 26, **characterized** in that the testing of the authenticity of a data carrier takes place in a remote host (52) on-line via remote data transmission means.

28. The authenticity testing system for data carriers of claim 25 or 26, **characterized** in that the encryption result determined in the data carrier is temporarily stored e.g. in the terminal or on a different data carrier (sales voucher, etc.) and decrypted and tested for correctness at a later time.

29. The authenticity testing system of claim 25, **characterized** in that symmetrical key algorithms (DES) are used.

30. The authenticity testing system of claim 25, **characterized** in that asymmetrical key algorithms (public key, RSA) are used, whereby the public key is stored in the data carrier.

31. The authenticity testing system of claim 26, **characterized** in that the variable quantity (RN) is used for the determination of the individual characteristics (M), in particular during the selection determination of the particular E²PROM memory cells to be evaluated.

32. The authenticity testing system for data carriers of any of claims 19 to 24, **characterized** in that in the initialization phase
the measuring means (54) determines the individual characteristics (M),
these characteristics (M) are fetched from outside via an outgoing line (56, 56a),
for the characteristics (M) a quantity (offset X1) is determined starting with a preset key (SK),
this offset (X1) is deposited in a memory (53) in the data carrier (51), and during the testing of the data carrier
the characteristics (M) are again determined internally,
the characteristics (M) are linked with the offset in a key forming unit (71) contained in the data carrier to form the preset key (SK),
this key (SK) is used for encrypting data (RN) made available externally and/or internally,
the encryption result is fetched from the data carrier, and
the fetched data are decrypted again and tested for correspondence with the data made available for encryption.

33. The authenticity testing system of claim 32, **characterized** in that a quantity (RN) varying from transaction to transaction, e.g. a random number, is used for encryption.

34. The authenticity testing system of claim 32 or 33, **characterized** in that an asymmetrical encryption algorithm (public key) is applied using a key (SK) to be kept secret and a key (P_{K}) that might be publicly accessible.

35. The authenticity testing system of claim 34, **characterized** in that the secret key (S_{K}) is formed in the data carrier and the decryption of the data takes place outside the data carrier with the public key (P_{K}).

36. The authenticity testing system of claim 32, **characterized** in that in the initialization phase a further key (K) is additionally loaded into the memory (53) of the data carrier, the characteristics (M) are stored outside the data carrier in a protected environment (63) and the authenticity testing also takes place on-line using this key (K) and encrypting the characteristics (M) determined by the measuring means (54).

## Revendications

1. Procédé pour l'authentification d'un support de données (1) comportant au moins un circuit intégré (4), des dispositifs de mémoire et de programmation ainsi que des éléments (5) pour l'entrée et la sortie de données, caractérisé en ce qu'on analyse pour chaque circuit une propriété physique améliorée, uniquement déterminée par le circuit intégré et on l'utilise comme donnée caractéristique pour chaque circuit afin de déterminer son authenticité.

2. Procédé pour l'authentification d'un support d'informations selon la revendication 1, caractérisé en ce que l'on analyse des propriétés qui varient de façon aléatoire d'un circuit à l'autre à cause des tolérances des procédés et techniques au cours de la fabrication des circuits intégrés et/ou à cause des tolérances dues à des contingences matérielles.

3. Procédé pour l'authentification d'un support d'informations selon la revendication 2, dans lequel le dispositif de mémoire contient une mémoire E²PROM, caractérisée en ce que les différentes durées d'exécution de programme pour les cellules de mémoire individuelle sont déterminées comme attribut caractérisant le circuit.

4. Procédé selon la revendication 3, caractérisé en ce que parmi la pluralité des cellules de mémoire, on choisit une matrice de mémoire de groupe, de préférence sous la forme d'une ou de plusieurs lignes de mémoire pour analyse.

5. Procédé selon la revendication 4, caractérisé en ce que le choix des cellules de mémoire à analyser est réalisé arbitrairement.

6. Procédé selon la revendication 4, caractérisé en ce que la sélection des cellules de mémoire à analyser est réalisée selon une prescription secrète prédéterminée.

7. Procédé selon l'une des revendications 3 à 6, caractérisé en ce que la durée d'exécution de programme nécessaire pour la reprogrammation des cellules de mémoire est divisée sur une période de temps prédéterminée en une séquence de rythme temporel de courte durée et le processus de programmation est réalisé selon ce rythme et au cours des arrêts de programme entre deux rythmes, le contenu de la mémoire des cellules de mémoire à analyser est lu.

8. Procédé selon la revendication 7, caractérisé en ce que pour chaque cellule de mémoire à analyser, la succession temporelle du processus de reprogrammation des cellules individuelles de cette ligne de cellule est mise en mémoire comme données caractéristiques pour ce circuit intégré.

9. Procédé selon la revendication 8, caractérisé en ce que l'on met en mémoire comme donnée de reconnaissance supplémentaire la différence temporelle entre les processus de reprogrammation de deux lignes qui se suivent ou d'une valeur correspondante pour cette différence temporelle.

10. Procédé selon la revendication 7, caractérisé en ce que l'on met en mémoire comme données caractéristiques les données des cellules de mémoire d'une ou plusieurs lignes de mémoire, qui comportent une durée de programme sensiblement identique.

11. Procédé selon l'une des revendications 3 à 6, caractérisé en ce que l'on choisit pour la reprogrammation des cellules de mémoire une ligne de mémoire d'une durée de programme, qui n'est pas suffisante pour la reprogrammation de toutes les cellules de mémoire de cette ligne et en ce que le contenu des lignes de mémoire selon cette durée de programmation raccourcie sert comme données caractéristiques au circuit intégré.

12. Procédé selon la revendication 11, caractérisé en ce que au cours de la lecture de la cellule de mémoire, on fait varier la tension de lecture pour fixer les cellules de mémoire qui, après cette durée de programme raccourcie, se trouvent exactement dans la zone frontière du processus de reprogrammation.

13. Procédé selon la revendication 2, caractérisé en ce que l'on analyse comme caractéristiques du circuit intégré des données individuelles en provenance des lignes caractéristiques d'entrée du circuit intégré.

14. Procédé selon la revendication 13, caractérisé en ce que l'on analyse parmi les données de ligne caractéristique, celles qui viennent à proximité ou directement de la zone de séparation.

15. Procédé selon la revendication 2, caractérisé en ce que l'on explore et l'on analyse comme caractéristique individuelle, la structure superficielle du circuit intégré.

16. Procédé selon la revendication 15, caractérisé en ce que l'on explore les pages du circuit intégré qui n'ont pas été lissées et qui ont été influencées en ce qui concerne leur contenu par le processus en dents de scie.

17. Procédé selon la revendication 1, caractérisé en ce que les structure fines produites pour la fabrication de la puce sont conçues en tant que propriété isolée caractérisant le circuit.

18. Procédé selon la revendication 17, caractérisé en ce que ces structures fines réalisées pour la fabrication sont constituées par des revêtements électriquement conducteurs à structure de surface à brouiller, qui sont susceptibles d'être explorées par mesure de résistance.

19. Support d'information (1) muni d'au moins un circuit intégré (4), qui comporte des dispositifs de mémoire et de logiciel, ainsi que des éléments (5) pour l'entrée et la sortie des données, caractérisé en ce que le support d'information comporte des dispositifs de mesure pour la détermination d'une propriété physique déterminée uniquement par le circuit intégré et différente pour chaque circuit, et ces dispositifs de mesure étant susceptibles d'être utilisés pour la détermination des données caractéristiques individuelles (M) pour le circuit.

20. Support d'informations selon la revendication 19, caractérisé en ce que le support d'informations comporte un micro-processeur.

21. Support d'informations selon la revendication 20, caractérisé en ce que le support d'informations comporte des dispositifs (60) pour le codage d'informations.

22. Support d'informations selon la revendication 21, caractérisé en ce que le support d'informations comporte un dispositif (71) pour le codage à partir des informations obtenues par le dispositif de mesure (54).

23. Support d'informations selon la revendication 19, caractérisé en ce que le dispositif de mesure (54) est adapté à l'analyse des propriétés du circuit intégré, ces propriétés variant d'un circuit à l'autre à cause des tolérances de techniques de procédé au cours de la fabrication du circuit intégré et/ou des tolérances en matière de matériau.

24. Support d'informations selon la revendication 23, caractérisé en ce que le dispositif de mémoire (53) comporte une mémoire E²PROM et en ce que le dispositif de mesure (54) est prévu pour la détermination des durées de programme différentes des cellules de mémoire individuelles.

25. Système pour l'authentification d'un support d'information selon l'une des revendications 19 à 24, caractérisé en ce que, au cours d'une phase d'initialisation:
- on détermine par le dispositif de mesure (54) les données caractéristiques individuelles (M) du circuit intégré;
- on appelle ces données caractéristiques (M) à partir du support d'informations (51) et on les met en mémoire dans un environnement de sécurité (63) à l'extérieur du support d'informations;
- les informations issues de ces données caractéristiques (M) sont reliées entre elles sous une forme irréversible après la phase d'initialisation par l'intermédiaire de moyens (57) prévus dans les supports d'informations; et
- on met en mémoire dans la mémoire (53) du support d'informations une information (K) servant de clef et dans le cadre de l'examen d'authentification du support de données,
- on détermine de façon interne les données caractéristiques (M) dans le support d'informations;
- on code ces données caractéristiques à l'aide de la clef en mémoire (K),
- on appelle la donnée de codage depuis le support d'information; et
- on décode dans la centrale (52) et l'on réalise une comparaison avec les données qui y sont en mémoire.

26. Système pour l'examen d'authentification selon la revendication 25, caractérisé en ce que au cours du codage des données caractéristiques (M), on intègre une grandeur (RN) variant d'une transaction à l'autre.

27. Système pour l'examen d'authentification selon la revendication 25 ou 26, caractérisé en ce que l'examen de l'authenticité d'un support d'informations est réalisé dans une centrale (52) placée à distance et connectée à des dispositifs de télétransmission de données.

28. Système pour l'examen d'authentification d'un support d'informations selon la revendication 25 ou 26, caractérisé en ce que les données de codage déterminées dans le support d'information, par exemple dans un terminal ou sur un autre support d'informations (document de vente, etc) sont mises en mémoire intermédiaire et sont examinées quant à leur exactitude.

29. Système pour l'examen d'authentification selon la revendication 25, caractérisé en ce que l'on utilise des algorithmes de codification symétriques (DES).

30. Système pour l'examen d'authentification selon la revendication 25, caractérisé en ce que l'on utilise des algorithmes de codage asymétriques (publik-Key, RSA), la codification publique étant mise en mémoire dans le support d'informations.

31. Système pour l'examen d'authentification selon la revendication 26, caractérisé en ce que l'on extrait la grandeur variable (RN) au cours de la détermination des données caractéristiques individuelles (N), en particulier au cours de la sélection de chaque cellule de mémoire et de E²PROM à analyser.

32. Système pour l'examen d'authentification d'un support d'informations selon l'une des revendications 19 et 24, caractérisé en ce qu'au cours de la phase d'initialisation:
- le dispositif de mesure (54) détermine les données caractéristiques individuelles (M);
- ces données caractérisées (M) sont appelées de l'extérieur via un conducteur (56, 56a) allant vers l'extérieur;
- on détermine une grandeur (Offset X1), dérivant pour les données caractéristiques (M) d'un code fixe prédéterminé (SK);
- on dépose cet offset (X1) dans une mémoire (53) de support d'informations et dans le cadre du test du support d'informations;
- on détermine à nouveau de façon interne les données caractéristiques (M);
- on établit une liaison des données caractéristiques (M) et de l'offset avec une unité de formation de codage (71) contenue dans le support d'informations, afin de créer le code prédéterminé (SK);
- on utilise ce code (SK) pour le codage des données préparées (RN) externes et/ou internes;
- on appelle sélectivement la donnée de codage du support d'information; et
- on code à nouveau les données appelées et on examine si elles sont en correspondance avec les données préparées pour le codage.

33. Système pour l'examen d'authentification selon la revendication 32, caractérisé en ce que pour le codage, on utilise une grandeur (RN) variant d'une transaction à l'autre, par exemple un nombre aléatoire.

34. Système pour l'examen d'authentification selon la revendication 32 ou 33, caractérisé en ce que l'on utilise un algorithme de codage asymétrique (Publik-key) en utilisant une clef maintenue secrète (SK) et une clé (P_{K}) accessible le cas échéant par le public.

35. Système pour l'examen d'authentification selon la revendication 34, caractérisé en ce que la clef secrète est formée dans le support d'information et le décodage des données est réalisé à l'extérieur du support d'information à l'aide de la clef publique (P_{K}).

36. Système pour l'examen d'authentification selon la revendication 32, caractérisé en ce que au cours de la phase d'initialisation, une autre clef (K) est chargée de façon supplémentaire dans la mémoire (53) du support d'informations, les données caractéristiques (M) sont mises en mémoire à l'extérieur du support d'information dans un environnement de sécurité (63) lorsque l'authentification est réalisée également à l'aide d'une connexion en ligne par extraction de ce code (K) et par décodage des données caractéristiques (M) déterminées par le dispositif de mesure (54).
